# EUROPEAN PATENT APPLICATION

(11) **EP 4 668 622 A1**
(43) Date of publication of application: **24.12.2025**
(21) Application number: 24810199.0
(22) Date of filing: 06.05.2024
(51) Int. Cl.: H04J 14/08, H04Q 11/00

(54) **DATA TRANSMISSION METHOD, OPTICAL NETWORK, RELATED DEVICE, AND STORAGE MEDIUM**

(30) Priority: 19.05.2023 CN 202310572195
(71) Applicant: Huawei Technologies Co., Ltd., Shenzhen, Guangdong 518129 (CN)
(72) Inventor: ZHANG, Yanbing, Shenzhen, Guangdong 518129 (CN); LI, Yanfeng, Shenzhen, Guangdong 518129 (CN); LI, Xin, Shenzhen, Guangdong 518129 (CN)
(74) Representative: Grünecker Patent- und Rechtsanwälte PartG mbB
(86) International application number: PCT/CN2024/091171
(87) International publication number: WO 2024/239952

(57) **Abstract**

This application provides a data transmission method, an optical network, a related device, and a storage medium, to effectively avoid a conflict occurring when an optical terminal receives a main downstream data stream and a backup downstream data stream, thereby effectively ensuring that the backup downstream data stream is successful backup of the main downstream data stream. The method includes: An optical head end obtains a main downstream slot and a backup downstream slot between which an intersection set is an empty set on a time axis. The optical head end occupies the main downstream slot, and sends a main downstream data stream to an optical terminal over a main link. The optical head end occupies the backup downstream slot, and sends a backup downstream data stream to the optical terminal over a backup link.

## Description

This application claims priority to Chinese Patent Application No. CN202310572195.6, filed with the China National Intellectual Property Administration on May 19, 2023 and entitled "DATA TRANSMISSION METHOD, OPTICAL NETWORK, RELATED DEVICE, AND STORAGE MEDIUM", which is incorporated herein by reference in its entirety.

### TECHNICAL FIELD

This application relates to the field of optical communication technologies, and in particular, to a data transmission method, an optical network, a related device, and a storage medium.

### BACKGROUND

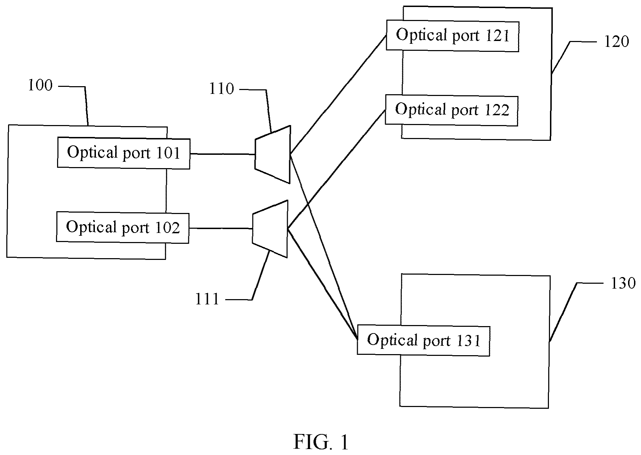

Type C (Type C) protection is defined in gigabit passive optical network (gigabit passive optical network, GPON) standards. The Type C protection can ensure successful data transmission between an optical head end and an optical terminal. For descriptions of the Type C protection, refer to FIG. 1. FIG. 1 is an example diagram of a structure of existing Type C protection. An optical network includes an optical head end 100, a first optical splitter 110, a second optical splitter 111, and an optical terminal 120. The optical head end 100 has two optical ports (namely, an optical port 101 and an optical port 102). The optical terminal 120 has two optical ports (namely, an optical port 121 and an optical port 122). The optical port 101 is connected to the optical port 121 via the first optical splitter 110, and the optical port 102 is connected to the optical port 122 via the optical splitter 111. To ensure successful data transmission between the optical head end 100 and the optical terminal 120, in the Type C protection, an optical path among the optical port 102, the second optical splitter 111, and the optical port 122 is used to back up an optical path among the optical port 101, the first optical splitter 110, and the optical port 121.

The optical terminal 120 is an optical terminal with high reliability. To reduce complexity and costs of an optical network connection, the optical network further includes an optical terminal 130 with low reliability. The optical terminal 130 includes only one optical port 131. If a manner of the Type C protection is used for the optical terminal 130 with the low reliability, the optical port 131 is separately connected to the optical splitter 110 and the optical splitter 111.

However, the optical port 131 receives main data from the optical splitter 110 and backup data from the optical splitter 111 at the same time. In this case, a conflict occurs when the optical port 131 receives the main data and the backup data. Consequently, the optical port 131 cannot successfully process the main data and the backup data. It can be learned that, for the optical terminal with the low reliability, the backup data cannot implement backup of the main data based on the Type C protection.

### SUMMARY

Embodiments of this application provide a data transmission method, an optical network, a related device, and a storage medium, to effectively avoid a conflict occurring when an optical terminal receives a main downstream data stream and a backup downstream data stream, thereby effectively ensuring that the backup downstream data stream is successful backup of the main downstream data stream.

A first aspect of embodiments of this application provides a data transmission method. The method includes: An optical head end occupies a main downstream slot, and sends a main downstream data stream to an optical terminal over a main link, where the main link is used to connect the optical terminal and the optical head end; and the optical head end occupies a backup downstream slot, and sends a backup downstream data stream to the optical terminal over a backup link, where the backup link is used to connect the optical terminal and the optical head end, the main link is different from the backup link, and an intersection set between the main downstream slot and the backup downstream slot is an empty set on a time axis. To effectively ensure that the intersection set between the main downstream slot and the backup downstream slot is the empty set on the time axis, there is a time interval between any main downstream slot and any backup downstream slot that are adjacent on the time axis.

As shown in this aspect, because the intersection set between the main downstream slot and the backup downstream slot is the empty set on the time axis, the same optical terminal receives the main downstream data stream and the backup downstream data stream in a time division manner, to avoid a conflict occurring when the optical terminal receives the main downstream data stream and the backup downstream data stream, thereby effectively ensuring that the backup downstream data stream is successful backup of the main downstream data stream.

Based on the first aspect, in an optional implementation, the optical terminal includes a first optical terminal, and that the optical head end occupies the main downstream slot, and sends the main downstream data stream to the optical terminal over the main link includes: The optical head end occupies the main downstream slot, and sends the main downstream data stream to a first terminal-side optical splitter over the main link, where the first terminal-side optical splitter is configured to connect the main link and the first optical terminal. That the optical head end occupies the backup downstream slot, and sends the backup downstream data stream to the optical terminal over the backup link includes: The optical head end occupies the backup downstream slot, and sends the backup downstream data stream to the first terminal-side optical splitter over the backup link, where the first terminal-side optical splitter is configured to connect the backup link and the first optical terminal.

In this implementation, to reduce complexity of the optical network and weights of optical fibers, a first optical terminal with low reliability is deployed in the optical network. A same optical port of the first optical terminal is connected to a first terminal-side optical splitter, and the first terminal-side optical splitter is separately connected to the main link and the backup link. Because the intersection set between the main downstream slot and the backup downstream slot is the empty set, the first terminal-side optical splitter can receive the main downstream data stream and the backup downstream data stream in the time division manner, and the first terminal-side optical splitter then sends the main downstream data stream and the backup downstream data stream to the same optical port of the first optical terminal in the time division manner. It can be learned that even if the first optical terminal with the low reliability is connected to the main link and the backup link through only one optical port, it can be ensured that the first optical terminal can receive only one of the main downstream data stream and the backup downstream data stream at the same time. This avoids a conflict occurring when the optical terminal with the low reliability receives the main downstream data stream and the backup downstream data stream.

Based on the first aspect, in an optional implementation, the optical terminal includes a second optical terminal, and that the optical head end occupies the main downstream slot, and sends the main downstream data stream to the optical terminal over the main link includes: The optical head end occupies the main downstream slot, and sends the main downstream data stream to a second terminal-side optical splitter over the main link, where the second terminal-side optical splitter is configured to connect the main link and the second optical terminal. That the optical head end occupies the backup downstream slot, and sends the backup downstream data stream to the optical terminal over the backup link includes: The optical head end occupies the backup downstream slot, and sends the backup downstream data stream to a third terminal-side optical splitter over the backup link, where the third terminal-side optical splitter is configured to connect the backup link and the second optical terminal, and the second terminal-side optical splitter is different from the third terminal-side optical splitter.

In this implementation, the second optical terminal with high reliability is connected to the main link through a main optical port, and is connected to the backup link through a backup optical port. In this case, even if the main port cannot successfully receive the main downstream data stream from the main link, because the main optical port is separated from the backup optical port, the backup optical port can successfully receive the backup downstream data stream. This ensures that the backup downstream data stream is successful backup of the main downstream data stream.

Based on the first aspect, in an optional implementation, the main downstream data stream is used to carry a main port identifier, the backup downstream data stream is used to carry a backup port identifier, the main port identifier identifies a main port of the optical head end, the main port is used to send the main downstream data stream over the main link, the backup port identifier identifies a backup port of the optical head end, and the backup port is used to send the backup downstream data stream over the backup link. The main port identifier and the backup port identifier indicate the optical terminal to extract a downstream service from the main downstream data stream or the backup downstream data stream.

In this implementation, because the main downstream data stream carries the main port identifier, and the backup downstream data stream carries the backup port identifier, the optical terminal can distinguish between the main downstream data stream and the backup downstream data stream based on the main port identifier and the backup port identifier. The optical terminal can select, based on the main port identifier and the backup port identifier, the main downstream data stream from the main downstream data stream and the backup downstream data stream, to extract the downstream service.

Based on the first aspect, in an optional implementation, before the optical head end occupies the main downstream slot, and sends the main downstream data stream to the optical terminal over the main link, the method further includes: The optical head end occupies a main ranging slot, and sends a main ranging message to the optical terminal over the main link, where the main ranging message is used to measure main round-trip time RTT between the optical head end and the optical terminal. Before the optical head end occupies the backup downstream slot, and sends the backup downstream data stream to the optical terminal over the backup link, the method further includes: The optical head end occupies a backup ranging slot, and sends a backup ranging message to the optical terminal over the backup link, where the backup ranging message is used to measure backup RTT between the optical head end and the optical terminal, and an intersection set between the main ranging slot and the backup ranging slot is an empty set on a time axis.

In this implementation, the optical head end sends the main ranging message and the backup ranging message to the optical terminal in the time division manner in the main ranging slot and the backup ranging slot between which an intersection set is the empty set on the time axis. The optical head end measures main RTT and backup RTT between the optical head end and each optical terminal. The optical head end can obtain the main downstream slot based on the main RTT, and obtain the backup downstream slot based on the backup RTT. This effectively ensures that a focal length between the main downstream slot and the backup downstream slot is an empty set on the time axis, thereby effectively avoiding a conflict occurring when the optical terminal receives the main downstream data stream and the backup downstream data stream.

Based on the first aspect, in an optional implementation, the main downstream slot includes a first main downstream slot and a second main downstream slot, the backup downstream slot includes a first backup downstream slot and a second backup downstream slot, and that the optical head end occupies the main downstream slot, and sends the main downstream data stream to the optical terminal over the main link includes: The optical head end separately occupies the first main downstream slot and the second main downstream slot, and sends a first main downstream data stream and a second main downstream data stream to the optical terminal. That the optical head end occupies the backup downstream slot, and sends the backup downstream data stream to the optical terminal over the backup link includes: The optical head end separately occupies the first backup downstream slot and the second backup downstream slot, and sends a first backup downstream data stream and a second backup downstream data stream to the optical terminal. The first main downstream slot, the first backup downstream slot, the second main downstream slot, and the second backup downstream slot are sequentially arranged on a time axis, and there is a time interval between any two adjacent downstream slots in the first main downstream slot, the first backup downstream slot, the second main downstream slot, and the second backup downstream slot.

As shown in this aspect, because an intersection set between any main downstream slot and any backup downstream slot that are adjacent is an empty set on the time axis, and there is a specific time interval, the same optical terminal receives the main downstream data stream and the backup downstream data stream in the time division manner, to avoid a conflict occurring when the optical terminal receives the main downstream data stream and the backup downstream data stream.

A second aspect of embodiments of this application provides a data transmission method. The method includes: An optical terminal occupies a main time period, and receives a main downstream data stream from an optical head end over a main link, where the main link is used to connect the optical terminal and the optical head end; and/or the optical terminal occupies a backup time period, and receives a backup downstream data stream from the optical head end over a backup link, where the backup link is used to connect the optical terminal and the optical head end, the optical terminal is separately connected to the main link and the backup link via a same terminal-side optical splitter, and an intersection set between the main time period and the backup time period is an empty set on a time axis.

For descriptions of beneficial effects in this aspect, refer to the first aspect. Details are not described again.

Based on the second aspect, in an optional implementation, after the optical terminal occupies the main time period, and receives the main downstream data stream from the optical head end over the main link, the method further includes: The optical terminal obtains a main port identifier carried in the main downstream data stream, where the main port identifier identifies a main port of the optical head end, and the main port is used to send the main downstream data stream over the main link. After the optical terminal occupies the backup time period, and receives the backup downstream data stream from the optical head end over the backup link, the method further includes: The optical terminal obtains a backup port identifier carried in the backup downstream data stream, where the backup port identifier identifies a backup port of the optical head end, and the backup port is used to send the backup downstream data stream over the backup link. The optical terminal extracts a downstream service from the main downstream data stream that carries the main port identifier.

Based on the second aspect, in an optional implementation, after the optical terminal occupies the main time period, and receives the main downstream data stream from the optical head end over the main link, the method further includes: If obtaining only a main port identifier, the optical terminal extracts a downstream service from the main downstream data stream, where the main port identifier identifies a main port of the optical head end, and the main port is used to send the main downstream data stream over the main link.

Based on the second aspect, in an optional implementation, after the optical terminal occupies the backup time period, and receives the backup downstream data stream from the optical head end over the backup link, the method further includes: If obtaining only a backup port identifier, the optical terminal extracts a downstream service from the backup downstream data stream, where the backup port identifier identifies a backup port of the optical head end, and the backup port is used to send the backup downstream data stream over the backup link.

Based on the second aspect, in an optional implementation, before the optical terminal occupies the main time period, and receives the main downstream data stream from the optical head end over the main link, the method further includes: The optical terminal occupies a main ranging time period, and receives a main ranging message from the optical head end over the main link, where the main ranging message is used to measure main round-trip time RTT between the optical head end and the optical terminal. Before the optical terminal occupies the backup time period, and receives the backup downstream data stream from the optical head end over the backup link, the method further includes: The optical terminal occupies a backup ranging time period, and receives a backup ranging message from the optical head end over the backup link, where the backup ranging message is used to measure backup RTT between the optical head end and the optical terminal, and an intersection set between the main ranging time period and the backup ranging time period is an empty set on a time axis.

Based on the second aspect, in an optional implementation, the main time period includes a first main time period and a second main time period, the backup time period includes a first backup time period and a second backup time period, and that the optical terminal occupies the main time period, and receives the main downstream data stream from the optical head end over the main link includes: The optical terminal separately occupies the first main time period and the second main time period, and receives a first main downstream data stream and a second main downstream data stream from the optical head end over the main link. That the optical terminal occupies the backup time period, and receives the backup downstream data stream from the optical head end over the backup link includes: The optical terminal separately occupies the first backup time period and the second backup time period, and receives the first backup downstream data stream and the second backup downstream data stream from the optical head end over the backup link.

The first main time period, the first backup time period, the second main time period, and the second backup time period are sequentially arranged on a time axis, and there is a time interval between any two adjacent time periods of the first main time period, the first backup time period, the second main time period, and the second backup time period.

A third aspect of embodiments of this application provides a data transmission method. The method is applied to an optical network, and the optical network includes an optical head end, a main link, a backup link, a terminal-side optical splitter, and an optical terminal. The method includes: The optical head end occupies a main downstream slot, and sends a main downstream data stream to the terminal-side optical splitter over the main link, where the main link is used to connect the terminal-side optical splitter and the optical head end; and the terminal-side optical splitter sends the main downstream data stream to the optical terminal. The optical head end occupies a backup downstream slot, and sends a backup downstream data stream to the terminal-side optical splitter over the backup link, where the backup link is used to connect the terminal-side optical splitter and the optical head end, the main link is different from the backup link, and an intersection set between the main downstream slot and the backup downstream slot is an empty set on a time axis; and the terminal-side optical splitter sends the backup downstream data stream to the optical terminal.

For descriptions of beneficial effects in this application, refer to the first aspect. Details are not described again.

Based on the third aspect, in an optional implementation, the optical terminal includes a first optical terminal, the terminal-side optical splitter includes a first terminal-side optical splitter, and that the optical head end occupies the main downstream slot, and sends the main downstream data stream to the terminal-side optical splitter over the main link includes: The optical head end occupies the main downstream slot, and sends the main downstream data stream to the first terminal-side optical splitter over the main link, where the first terminal-side optical splitter is configured to connect the main link and the first optical terminal. That the terminal-side optical splitter sends the main downstream data stream to the optical terminal includes: The first terminal-side optical splitter sends the main downstream data stream to the first optical terminal. That the optical head end occupies the backup downstream slot, and sends the backup downstream data stream to the terminal-side optical splitter over the backup link includes: The optical head end occupies the backup downstream slot, and sends the backup downstream data stream to the first terminal-side optical splitter over the backup link, where the first terminal-side optical splitter is configured to connect the backup link and the first optical terminal. That the terminal-side optical splitter sends the backup downstream data stream to the optical terminal includes: The first terminal-side optical splitter sends the backup downstream data stream to the first optical terminal.

Based on the third aspect, in an optional implementation, the optical terminal includes a second optical terminal, the terminal-side optical splitter includes a second terminal-side optical splitter and a third terminal-side optical splitter, and that the optical head end occupies the main downstream slot, and sends the main downstream data stream to the terminal-side optical splitter over the main link includes: The optical head end occupies the main downstream slot, and sends the main downstream data stream to the second terminal-side optical splitter over the main link, where the second terminal-side optical splitter is configured to connect the main link and the second optical terminal. That the terminal-side optical splitter sends the main downstream data stream to the optical terminal includes: The second terminal-side optical splitter sends the main downstream data stream to the second optical terminal. That the optical head end occupies the backup downstream slot, and sends the backup downstream data stream to the terminal-side optical splitter over the backup link includes: The optical head end occupies the backup downstream slot, and sends the backup downstream data stream to the third terminal-side optical splitter over the backup link, where the third terminal-side optical splitter is configured to connect the backup link and the second optical terminal. That the terminal-side optical splitter sends the backup downstream data stream to the optical terminal includes: The third terminal-side optical splitter sends the backup downstream data stream to the second optical terminal.

A fourth aspect of this application provides an optical network. The optical network includes an optical head end, a main link, a backup link, a terminal-side optical splitter, and an optical terminal. The optical head end is separately connected to the main link and the backup link, and the terminal-side optical splitter is separately connected to the main link, the backup link, and the optical terminal. The optical head end is configured to: occupy a main downstream slot, and send a main downstream data stream to the terminal-side optical splitter over the main link. The terminal-side optical splitter is configured to send the main downstream data stream to the optical terminal. The optical head end is configured to: occupy a backup downstream slot, and send a backup downstream data stream to the terminal-side optical splitter over the backup link. An intersection set between the main downstream slot and the backup downstream slot is an empty set on a time axis. The terminal-side optical splitter is configured to send the backup downstream data stream to the optical terminal.

For descriptions of beneficial effects in this aspect, refer to the first aspect. Details are not described again.

Based on the fourth aspect, in an optional implementation, the optical terminal includes a first optical terminal, the terminal-side optical splitter includes a first terminal-side optical splitter, and the first optical terminal is separately connected to the main link and the backup link via the first terminal-side optical splitter.

Based on the fourth aspect, in an optional implementation, the optical terminal includes a second optical terminal, the terminal-side optical splitter includes a second terminal-side optical splitter and a third terminal-side optical splitter, the second optical terminal is connected to the main link via the second terminal-side optical splitter, and the second optical terminal is connected to the backup link via the third terminal-side optical splitter.

Based on the fourth aspect, in an optional implementation, at least one main optical splitter is included on the main link, at least one backup optical splitter is included on the backup link, the terminal-side optical splitter is connected to one of the at least one main optical splitter, and the terminal-side optical splitter is connected to one of the at least one backup optical splitter.

Based on the fourth aspect, in an optional implementation, the optical network includes N sequentially arranged optical terminals, where N is any integer not less than 2; and time at which the N optical terminals receive the main downstream data stream is in ascending order, and time at which the N optical terminals receive the backup downstream data stream is in descending order.

A fifth aspect of this application provides an optical network. The optical network includes an optical head end, a main link, a backup link, a terminal-side optical splitter, a first optical terminal, and a second optical terminal. For descriptions of a structure and beneficial effects in this aspect, refer to the fourth aspect. Details are not described again.

A sixth aspect of this application provides an optical head end, including a transmitter and a processor. The transmitter is connected to the processor. The processor is configured to: send a main downstream data stream to the transmitter, and indicate a main downstream slot; and the transmitter is configured to: occupy the main downstream slot, and send the main downstream data stream to an optical terminal over a main link, where the main link is used to connect the optical terminal and the optical head end. The processor is configured to: send a backup downstream data stream to the transmitter, and indicate a backup downstream slot; and the transmitter is configured to: occupy the backup downstream slot, and send the backup downstream data stream to the optical terminal over a backup link, where the backup link is used to connect the optical terminal and the optical head end, the main link is different from the backup link, and an intersection set between the main downstream slot and the backup downstream slot is an empty set on a time axis.

For descriptions of beneficial effects in this aspect, refer to the first aspect. Details are not described again.

A seventh aspect of this application provides an optical head end, including a sending module and a processing module. The processing module is configured to: send a main downstream data stream to the sending module, and indicate a main downstream slot. The sending module is configured to: occupy the main downstream slot, and send the main downstream data stream to an optical terminal over a main link, where the main link is used to connect the optical terminal and the optical head end; and the processing module is configured to: send a backup downstream data stream to the sending module, and indicate a backup downstream slot. The sending module is configured to: occupy the backup downstream slot, and send the backup downstream data stream to the optical terminal over a backup link, where the backup link is used to connect the optical terminal and the optical head end, the main link is different from the backup link, and an intersection set between the main downstream slot and the backup downstream slot is an empty set on a time axis.

For descriptions of beneficial effects in this aspect, refer to the first aspect. Details are not described again.

An eighth aspect of this application provides an optical terminal, including a receiver and a processor. The receiver is connected to the processor. The receiver is configured to: occupy a main time period, and receive a main downstream data stream from an optical head end over a main link, where the main link is used to connect the optical terminal and the optical head end; and the processor is configured to process the main downstream data stream from the receiver; and/or the receiver is configured to: occupy a backup time period, and receive a backup downstream data stream from the optical head end over a backup link, where the backup link is used to connect the optical terminal and the optical head end, the optical terminal is separately connected to the main link and the backup link via a same terminal-side optical splitter, and an intersection set between the main time period and the backup time period is an empty set on a time axis; and the processor is configured to process the backup downstream data stream from the receiver.

For descriptions of beneficial effects in this aspect, refer to the second aspect. Details are not described again.

A ninth aspect of this application provides an optical terminal, including a receiving module and a processing module. The receiving module is configured to: occupy a main time period, and receive a main downstream data stream from an optical head end over a main link, where the main link is used to connect the optical terminal and the optical head end; and the processing module is configured to process the main downstream data stream from the receiving module; and/or the receiving module is configured to: occupy a backup time period, and receive a backup downstream data stream from the optical head end over a backup link, where the backup link is used to connect the optical terminal and the optical head end, the optical terminal is separately connected to the main link and the backup link via a same terminal-side light splitting module, and an intersection set between the main time period and the backup time period is an empty set on a time axis; and the processing module is configured to process the backup downstream data stream from the receiving module.

For descriptions of beneficial effects in this aspect, refer to the second aspect. Details are not described again.

A tenth aspect of this application provides a computer-readable storage medium. The computer storage medium stores a computer program, the computer program includes program instructions, and when the program instructions are executed by a processor, the processor is caused to perform the method according to either of the first aspect or the second aspect.

### BRIEF DESCRIPTION OF DRAWINGS

FIG. 1 is an example diagram of a structure of existing Type C protection;
FIG. 2 is an example diagram of an in-vehicle network;
FIG. 3 is an example diagram of a structure of a first embodiment of an optical network according to this application;
FIG. 4 is an example diagram of slots in which an optical head end sends downstream data streams according to this application;
FIG. 5 is an example diagram of slots in which an optical head end sends downstream data streams and an optical terminal receives the downstream data streams according to this application;
FIG. 6 is an example diagram of slots in an embodiment in which an optical head end performs ranging on each optical terminal in an optical network according to this application;
FIG. 7 is an example diagram of a frame structure of an embodiment of a main downstream data stream according to this application;
FIG. 8 is an example diagram of a frame structure of an embodiment of a backup downstream data stream according to this application;
FIG. 9 is an example diagram of a fault of a first embodiment of an optical network according to this application;
FIG. 10 is an example diagram of a structure of a second embodiment of an optical network according to this application;
FIG. 11 is an example diagram of a fault of a second embodiment of an optical network according to this application;
FIG. 12 is an example diagram of a fault of a third embodiment of an optical network according to this application;
FIG. 13 is an example diagram of allocating upstream slots according to this application;
FIG. 14 is a flowchart of steps of a first embodiment of a data transmission method according to this application;
FIG. 15 is a flowchart of steps of a second embodiment of a data transmission method according to this application;
FIG. 16 is a flowchart of steps of a third embodiment of a data transmission method according to this application;
FIG. 17 is an example diagram of a structure of a first embodiment of an optical communication device according to this application; and
FIG. 18 is an example diagram of a structure of a second embodiment of an optical communication device according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

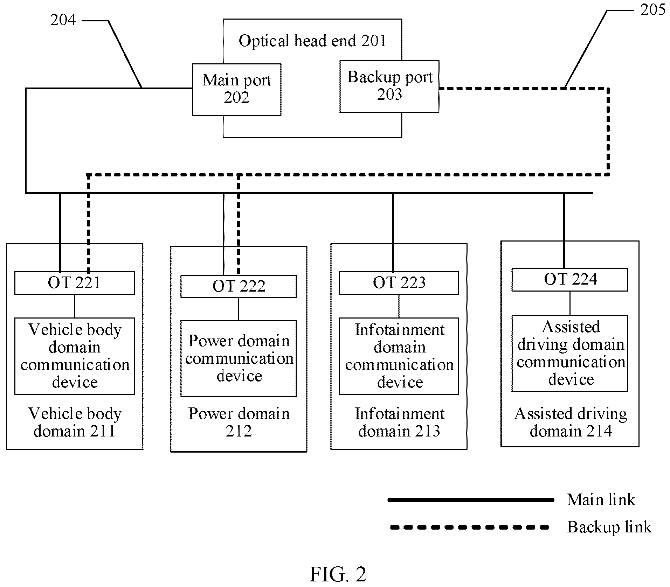

This application provides an optical network, and the optical network may be used in an in-vehicle network. FIG. 2 is an example diagram of an in-vehicle network. The in-vehicle network includes an optical head end 201, and the optical head end 201 has a main port 202 and a backup port 203. The main port 202 is connected to a main link 204, and the backup port 203 is connected to a backup link 205. The in-vehicle network further includes a plurality of functional domains, for example, a vehicle body domain 211, a power domain 212, an infotainment domain 213, and an assisted driving domain 214. Each functional domain includes one or more optical terminals (optical terminals, OTs), and the functional domain further includes one or more communication devices connected to each OT. For example, the vehicle body domain 211 includes an OT 221 and a vehicle body power domain communication device that performs intra-functional domain communication with the OT 221. The vehicle body domain 211 is configured to control various control components of a vehicle system. The vehicle body power domain communication device may be a brake light, a position light, a door lock, a vehicle window, or the like. The power domain 212 includes an OT 222 and a power domain communication device that performs intra-functional domain communication with the OT 222. The power domain 212 is related to vehicle traveling, and the power domain communication device may be configured to run a drive system, a traveling system, a steering system, a braking system, and the like. The infotainment domain 213 includes an OT 223 and an infotainment domain communication device that performs intra-functional domain communication with the OT 223. The infotainment domain communication device is configured to implement functions such as intelligent vehicle driving, in-vehicle interconnection, and infotainment, the infotainment domain communication device may be a meter of a vehicle, a streaming media rearview mirror, a communication device that runs a central control system, a communication device that runs an in-vehicle infotainment system, a communication device that runs a head-up display system, or the like. The assisted driving domain 214 includes an OT 224 and an assisted driving domain communication device that performs intra-functional domain communication with the OT 224. The assisted driving domain communication device is used to enable the vehicle to have capabilities of multi-sensor fusion, positioning, path planning, and decision-making control. The assisted driving domain communication device may be a device such as a camera, a millimeter-wave radar, or a laser radar. Functional domains obtained by dividing the in-vehicle network and a specific communication device included in each functional domain are not limited in this example.

The communication device in each functional domain is connected to an OT via a bus. The bus may be a controller area network (controller area network, CAN) bus, a local interconnect network (local interconnect network, LIN) bus, an Ethernet (Ethernet, ETH) bus, or a FLEXRAY bus. FLEXRAY is a registered trademark of the Daimler Chrysler corporation. The OT in each functional domain is connected to the main link 204. In this case, the optical head end 201 can communicate with the OT in each functional domain over the main link 204. The communication device in each functional domain is a device that performs a corresponding function in each functional domain in the vehicle. The vehicle body domain 211 is used as an example. The OT may be an independent device connected to the vehicle body domain communication device. For another example, the OT may be integrated into the vehicle body domain communication device. In this case, a type of the OT in this example may be a network interface card, a board, a communication interface, a communication apparatus (for example, an optical module), or the like, which is not specifically limited.

In the in-vehicle network, a functional domain that implements an important function has high reliability, and a functional domain that implements a less important function has low reliability. For example, the vehicle body domain 211 and the power domain 212 have high reliability, and the infotainment domain 213 and the assisted driving domain 214 have low reliability. Specifically, an OT in a functional domain with high reliability is separately connected to the main link 204 and the backup link 205 through optical fibers. For example, the OT 221 in the vehicle body domain 211 is separately connected to the main link 204 and the backup link 205 through optical fibers. The OT 222 in the power domain 212 is separately connected to the main link 204 and the backup link 205 through optical fibers. It may be understood that, if at least one of the main port 202 of the optical head end 201, a main port of the OT 221, an optical fiber connected between the main port of the OT 221 and the main link, and the main link 204 between the OT 221 and the optical head end 201 is faulty, the optical head end 201 communicates with the OT 221 over the backup link 205, to implement the high reliability of the vehicle body domain 211. Similarly, if at least one of the main port 202 of the optical head end 201, a main port of the OT 222, an optical fiber connected between the main port of the OT 222 and the main link 204, and the main link 204 between the OT 222 and the optical head end 201 is faulty, the optical head end 201 communicates with the OT 222 over the backup link 205, to implement the high reliability of the power domain 212. However, the infotainment domain 213 and the assisted driving domain 214 have the low reliability. In this case, the OT 223 in the infotainment domain 213 and the OT 224 in the assisted driving domain 214 are connected only to the main link 204. Because the functional domain with the low reliability does not need to be connected to the backup link 205, connection costs of the functional domain with the low reliability in the in-vehicle network are reduced.

The functional domains in the in-vehicle network shown in this example are connected to the optical head end 201 in different manners based on different requirements for high reliability or low reliability. Because the functional domain with the high reliability is connected to the optical head end 201 over the main link 204 and the backup link 205, a communication success rate of the functional domain with the high reliability is effectively improved. Because the functional domain with the low reliability is connected only to the main link 204, connection complexity of the functional domain with the low reliability is reduced, thereby reducing connection costs and weights of optical fibers.

An example in which the optical network provided in this embodiment of this application is used in the in-vehicle network is used. This is not limited. For example, the optical network provided in this embodiment of this application may be further used in a passive optical network (passive optical network, PON), an optical transport network (optical transport network, OTN), industrial control, data backhaul, a data center, a monitoring center, and the like. In this example, a device type of each device included in the optical network is not limited. For example, the optical head end may be an optical line terminal (optical line terminal, OLT), and the communication device integrating the OT may be an optical network unit (optical network unit, ONU). For another example, the optical head end may be a base station controller (base station controller, BSC), and the communication device integrating the OT may be a base transceiver station (base transceiver station, BTS). For another example, the optical head end may be a switch, and the communication device integrating the OT may be a server.

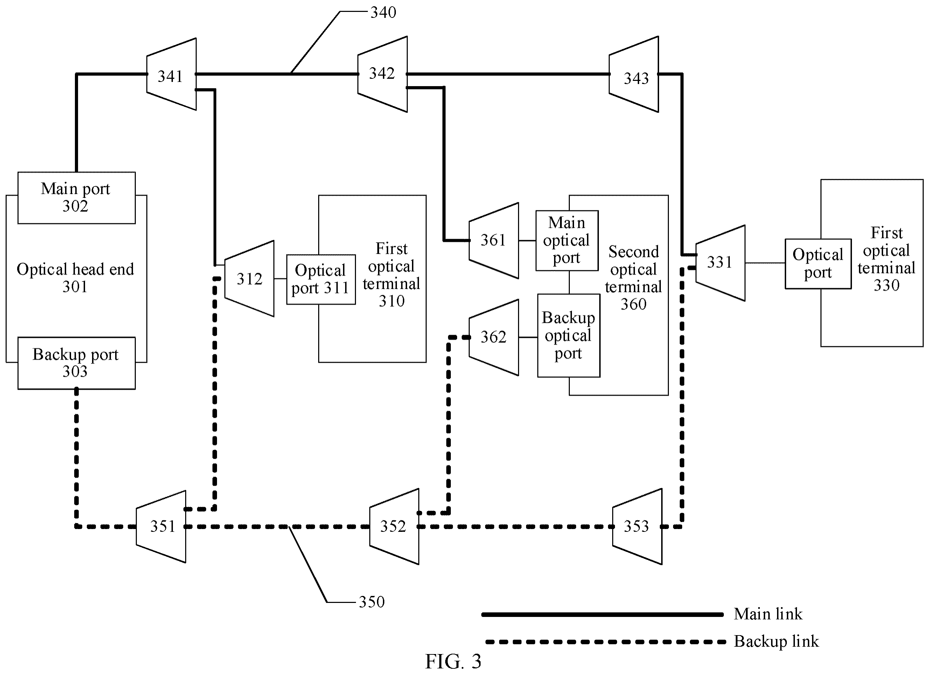

The optical network provided in this application can successfully protect both an optical terminal with high reliability and an optical terminal with low reliability. For a structure of the optical network shown in this embodiment, refer to FIG. 3. FIG. 3 is an example diagram of a structure of a first embodiment of an optical network according to this application.

The optical network shown in this embodiment includes an optical head end 301, a main link 340, a backup link 350, a terminal-side optical splitter, at least one first optical terminal, and at least one second optical terminal. The first optical terminal is an optical terminal with high reliability, and the second optical terminal is an optical terminal with low reliability. For descriptions of the optical terminal with the high reliability and the optical terminal with the low reliability, refer to FIG. 2. Details are not described again. It may be understood that the first optical terminal with the high reliability is separately connected to the main link 340 and the backup link 350, and the second optical terminal with the low reliability is connected only to the main link 340. In this embodiment, an example in which the optical network includes two first optical terminals, namely, a first optical terminal 310 and a first optical terminal 330, and includes one second optical terminal 360 is used. A quantity of first optical terminals and a quantity of second optical terminals included in the optical network are not limited in this embodiment. In this embodiment, an example in which the optical head end 301, the first optical terminal 310, the second optical terminal 360, and the first optical terminal 330 are sequentially arranged is further used. An arrangement form of the first optical terminal and the second optical terminal that are included in the optical network is not limited in this embodiment.

Specifically, the optical head end 301 includes a main port 302 and a backup port 303. The optical head end 301 may be one optical device or a cluster of a plurality of optical devices. This is not specifically limited. The optical head end 301 includes a main optical module and a backup optical module. The main optical module has the main port 302 for transmitting a main downstream data stream to each optical terminal in the optical network, and the main port 302 is a transmission channel of an optical signal of the main optical module. The backup optical module has the backup port 303 for transmitting a backup downstream data stream to each optical terminal in the optical network, and the backup port 303 is a transmission channel of an optical signal of the backup optical module. For example, the optical head end 301 shown in this embodiment may be one OLT or a cluster including a plurality of OLTs. If the optical head end 301 includes one OLT, the OLT has two optical modules. One main optical module has the main port 302, and the other backup optical module has the backup port 303. If the optical head end 301 includes a plurality of OLTs, a main optical module of one OLT has the main port 302, and a backup optical module of another OLT has the backup port 303. This is not specifically limited in this embodiment. The main downstream data stream emitted from the main port is backed up through transmission of the backup downstream data stream emitted from the backup port.

The first optical terminal 310 is used as an example. The first optical terminal 310 with the low reliability includes one optical module, and the optical module has an optical port 311. The optical network further includes a first terminal-side optical splitter 312 connected to the optical port 311 of the first optical terminal 310. The first terminal-side optical splitter 312 is an N*M optical splitter. N is a quantity of input ports that are included in the first terminal-side optical splitter 312 and that are used to receive a downstream data stream from the optical head end 301. M is a quantity of output ports that are included in the first terminal-side optical splitter 312 and that are used to transmit a downstream data stream to the first optical terminal 310. M is any integer not less than 2, and N is any integer not less than 1. Specifically, one input port of the first terminal-side optical splitter 312 is connected to the main link 340, and receives a main downstream data stream from the optical head end 301 over the main link 340. The other input port of the first terminal-side optical splitter 312 is connected to the backup link 350, and receives a backup downstream data stream from the optical head end 301. When receiving the main downstream data stream, the first terminal-side optical splitter 312 transmits the main downstream data stream to the first optical terminal 310 through an output port. Similarly, the other input port of the first terminal-side optical splitter 312 is connected to the backup link 350, and receives the backup downstream data stream from the optical head end 301. The other input port of the first terminal-side optical splitter 312 is connected to the backup link 350, and receives the backup downstream data stream from the optical head end 301 over the backup link 350. When receiving the backup downstream data stream, the first terminal-side optical splitter 312 transmits the backup downstream data stream to the first optical terminal 310 through the output port. In this embodiment, an example in which the output port of the first terminal-side optical splitter 312 is connected to one first optical terminal 310 is used. In another example, the first terminal-side optical splitter 312 may include two or more output ports, and each output port is connected to one first optical terminal. For descriptions of connecting the first optical terminal 330 to the main link 340 and the backup link 350, refer to the descriptions of connecting the first optical terminal 310 to the main link 340 and the backup link 350. Details are not described again.

The second optical terminal 360 is used as an example. The second optical terminal 360 with high reliability includes two optical modules, namely, a main optical module and a backup optical module. The main optical module has a main optical port, and the backup optical module has a backup optical port. The main optical port of the second optical terminal 360 is connected to the main link 340, and the backup optical port of the second optical terminal 360 is connected to the backup link 350. The optical network shown in this embodiment further includes a second terminal-side optical splitter 361 configured to connect the second optical terminal 360 to the main link 340. The optical network further includes a third terminal-side optical splitter 362 configured to connect the second optical terminal 360 to the backup link 350. For descriptions of structures of the second terminal-side optical splitter 361 and the third terminal-side optical splitter 362, refer to the descriptions of the first terminal-side optical splitter 312. Details are not described again. An input port of the second terminal-side optical splitter 361 is connected to the main link 340, and an output port of the second terminal-side optical splitter 361 is connected to the main optical port of the second optical terminal 360. An input port of the third terminal-side optical splitter 362 is connected to the backup link 350, and an output port of the third terminal-side optical splitter 362 is connected to the backup optical port of the second optical terminal 360.

Each optical terminal included in the optical network is connected to the main link 340, and the optical head end 301 sends a main downstream data stream to each optical terminal over the main link 340. Specifically, a plurality of sequentially connected main optical splitters are included on the main link 340. A specific quantity of main optical splitters included on the main link 340 is not limited in this embodiment. Each main optical splitter includes an input port used to receive a main downstream data stream and an output port used to send the main downstream data stream to the optical terminal. Still refer to FIG. 3. A main optical splitter 341, a main optical splitter 342, and a main optical splitter 343 that are sequentially connected are included on the main link 340. An input port of the main optical splitter 341 is connected to the main port 302 of the optical head end 301. One output port of the main optical splitter 341 is connected to the first terminal-side optical splitter 312, and the other output port of the main optical splitter 341 is connected to an input port of the main optical splitter 342. The input port of the main optical splitter 342 is connected to the main optical splitter 341, an output port of the main optical splitter 342 is connected to the main optical splitter 343, the other output port of the main optical splitter 342 is connected to the input port of the second terminal-side optical splitter 361, and the output port of the second terminal-side optical splitter 361 is connected to the main optical port of the second optical terminal 360. The input port of the main optical splitter 343 is connected to the main optical splitter 342, an output port of the main optical splitter 343 is connected to the first terminal-side optical splitter 331, and the output port of the first terminal-side optical splitter 331 is connected to the optical port of the first optical terminal 330. It may be understood that the first optical terminal 310 is connected to the optical head end 301 via the first terminal-side optical splitter 312 and the main optical splitter 341 in sequence. The second optical terminal 360 is connected to the optical head end 301 via the second terminal-side optical splitter 361, the main optical splitter 342, and the main optical splitter 341 in sequence, and so on. In this embodiment, an example in which the main optical port of the second optical terminal 360 is connected to the main optical splitter 342 on the main link via the second terminal-side optical splitter 361 is used. In another example, the main optical port of the second optical terminal 360 may alternatively be directly connected to the main optical splitter 342. This is not specifically limited. In this embodiment, an example in which a quantity of main optical splitters included on the main link 340 is the same as a quantity of optical terminals included in the optical network is used. For example, if the optical network includes three optical terminals, three main optical splitters are included on the main link 340. It should be noted that, the quantity of main optical splitters included on the main link 340 is not limited in this embodiment, provided that each optical terminal can be connected to an output port of one main optical splitter included on the main link 340.

Each optical terminal included in the optical network is connected to the backup link 350, and the optical head end 301 sends a backup downstream data stream to each optical terminal over the backup link 350. Specifically, a plurality of sequentially connected backup optical splitters are included on the backup link 350. A specific quantity of backup optical splitters included on the backup link 350 is not limited in this embodiment. Each backup optical splitter includes an input port used to receive a backup downstream data stream and an output port used to send the backup downstream data stream to each optical terminal. For example, as shown in FIG. 3, a backup optical splitter 351, a backup optical splitter 352, and a backup optical splitter 353 that are sequentially connected are included on the backup link 350. An input port of the backup optical splitter 351 is connected to the backup port 303 of the optical head end 301, one output port of the backup optical splitter 351 is connected to the first terminal-side optical splitter 312, and the other output port of the backup optical splitter 351 is connected to an input port of the backup optical splitter 352. The input port of the backup optical splitter 352 is connected to the backup optical splitter 351, one output port of the backup optical splitter 352 is connected to the backup optical splitter 353, and the other output port of the backup optical splitter 352 is connected to the input port of the third terminal-side optical splitter 362. The input port of the backup optical splitter 353 is connected to the backup optical splitter 352, and one output port of the backup optical splitter 3 53 is connected to the third terminal-side optical splitter 362. The other output port of the backup optical splitter 353 is connected to the first terminal-side optical splitter 331. It may be understood that the first optical terminal 310 is connected to the backup port 303 via the first terminal-side optical splitter 312 and the backup optical splitter 351 in sequence. The second optical terminal 360 is connected to the backup port 303 via the third terminal-side optical splitter 362, the backup optical splitter 352, and the backup optical splitter 351 in sequence, and so on. In this embodiment, an example in which the backup optical port of the second optical terminal 360 is connected to the backup optical splitter 352 on the backup link via the third terminal-side optical splitter 362 is used. In another example, the backup optical port of the second optical terminal 360 may alternatively be directly connected to the backup optical splitter 352. This is not specifically limited. In this embodiment, an example in which a quantity of backup optical splitters included on the backup link 350 is the same as a quantity of optical terminals included in the optical network is used. It should be noted that the quantity of backup optical splitters included on the backup link 350 is not limited in this embodiment, provided that each optical terminal can be connected to an output port of one backup optical splitter included on the backup link 350.

The first optical terminal 310 with the low reliability is connected to both the main link 340 and the backup link 350 through the same optical port 311. The second optical terminal 360 with the high reliability is separately connected to the main link 340 and the backup link 350 through different optical ports. According to the optical network shown in this embodiment, it can be ensured that the first optical terminal including only one optical port can receive only one of the main downstream data stream and the backup downstream data stream from the optical head end 301 at the same time. A case in which the first optical terminal 310 receives both the main downstream data stream and the backup downstream data stream at the same time does not occur, to ensure that a conflict does not occur when the first optical terminal 310 receives the main downstream data stream and the backup downstream data stream from the optical head end 301, thereby ensuring that the first optical terminal 310 can successfully process the downstream data stream from the optical head end 301. Specifically, the optical head end 301 occupies a main downstream slot, and sends the main downstream data stream over the main link 340. The optical head end 301 occupies a backup downstream slot, and sends the backup downstream data stream over the backup link 350. To back up the main downstream data stream through transmission of the backup downstream data stream, a downstream service carried in the backup downstream data stream is the same as a downstream service carried in the main downstream data stream. To prevent the same optical terminal from receiving both the main downstream data stream and the backup downstream data stream at the same time, the main downstream slot is different from the backup downstream slot.

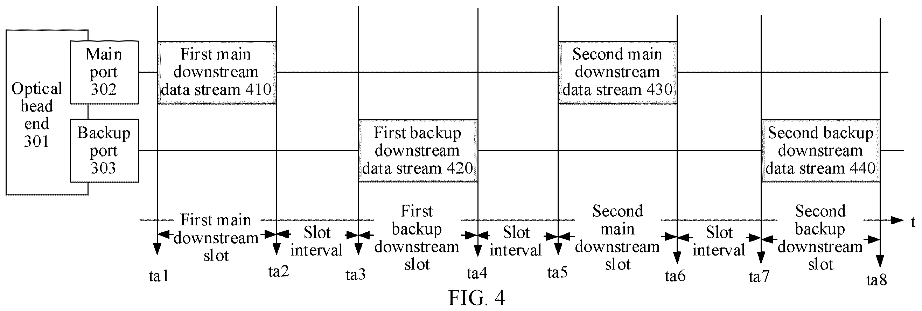

FIG. 4 is an example diagram of slots in which the optical head end sends downstream data streams according to this application. The main port 302 of the optical head end 301 occupies a plurality of main downstream slots and sends main downstream data streams. The backup port 303 of the optical head end 301 occupies a plurality of backup downstream slots and sends backup downstream data streams. A quantity of main downstream slots occupied by the main port 302 and a quantity of backup downstream slots occupied by the backup port 303 are not limited in this embodiment. For example, as shown in FIG. 4, the main port 302 occupies a first main downstream slot and a second main downstream slot, and the backup port 303 occupies a first backup downstream slot and a second backup downstream slot. On a time axis, start time of the first main downstream slot is ta1, end time is ta2, and the time ta2 is greater than the time ta1. Start time of the first backup downstream slot is ta3, end time is ta4, and the time ta4 is greater than the time ta3. In addition, on the time axis, start time of the second main downstream slot is ta5, end time is ta6, and the time ta6 is greater than the time ta5. Start time of the second backup downstream slot is ta7, end time is ta8, and the time ta8 is greater than the time ta7. The time ta1, the time ta2, the time ta3, the time ta4, the time ta5, the time ta6, the time ta7, and the time ta8 are in ascending order. In this case, the first main downstream slot, the first backup downstream slot, the second main downstream slot, and the second backup downstream slot are sequentially arranged on the time axis. It may be understood that, an intersection set between any two downstream slots in the first main downstream slot, the second main downstream slot, the first backup downstream slot, and the second backup downstream slot is an empty set on the time axis. To prevent the same optical terminal from receiving both the main downstream data stream and the backup downstream data stream at the same time, there is a time interval between the main downstream slot and the backup downstream slot that are adjacent on the time axis. For example, there is a time interval between the first main downstream slot and the first backup downstream slot, start time of the time interval is the time ta2, and end time is the time ta3. By analogy, there is a time interval between the second main downstream slot and the second backup downstream slot, start time of the time interval is the time ta6, and end time is the time ta7. It should be noted that duration of each main downstream slot, each backup downstream slot, and each time interval is not limited in this embodiment.

The main port 302 occupies the first main downstream slot and sends a first main downstream data stream 410, and the backup port 303 occupies the first backup downstream slot and sends a first backup downstream data stream 420. The first main downstream data stream 410 and the first backup downstream data stream 420 carry a same downstream service, to back up the first main downstream data stream 410 through transmission of the first backup downstream data stream 420. The main port 302 occupies the second main downstream slot and sends a second main downstream data stream 430, and the backup port 303 occupies the second backup downstream slot and sends a second backup downstream data stream 440. The second main downstream data stream 430 and the second backup downstream data stream 440 carry a same downstream service, to back up the second main downstream data stream 430 through transmission of the second backup downstream data stream 440. It may be understood that the main port and the backup port of the optical head end 301 shown in this embodiment emit light in a burst mode. That is, the main port of the optical head end emits the light only within the duration of the main downstream slot to send the main downstream data stream. The backup port of the optical head end emits the light only within the duration of the backup downstream slot to send the backup downstream data stream. Because the main port and the backup port of the optical head end emit the light in the burst mode, it is effectively ensured that the same optical terminal can receive only one downstream data stream at the same time, and does not receive the main downstream data stream and the backup downstream data stream at the same time. This effectively avoids a conflict occurring when the same optical terminal receives the main downstream data stream and the backup downstream data stream.

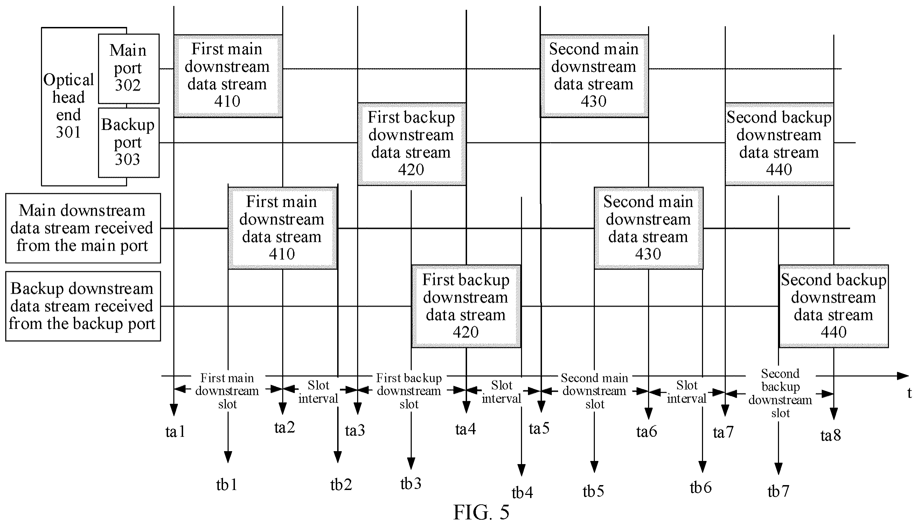

With reference to FIG. 3 to FIG. 5, a process of transmitting a main downstream data stream and a backup downstream data stream in the optical network is described. FIG. 5 is an example diagram of slots in which the optical head end sends downstream data streams and the optical terminal receives the downstream data streams according to this application. The main port 302 of the optical head end 301 occupies a first main downstream slot and sends a first main downstream data stream 410. The first main downstream data stream 410 is transmitted to the first terminal-side optical splitter 312 via the main optical splitter 341 on the main link. The first terminal-side optical splitter 312 transmits the first main downstream data stream 410 to the first optical terminal 310. In this example, an example in which the first optical terminal 310 in a plurality of optical terminals included in the optical network is closest to the main port 302 is used. In this case, in the optical network, the first optical terminal 310 first receives the first main downstream data stream 410 from the main port 302. In this example, the first optical terminal 310 occupies a first main time period and receives the first main downstream data stream 410. On a time axis, start time of the first main time period is tb1, end time is tb2, the time tb2 is greater than the time tb1, and the time tb1 is greater than the time ta1. The backup port 303 of the optical head end 301 occupies a first backup downstream slot and sends a first backup downstream data stream 420. The first backup downstream data stream 420 is transmitted to the first terminal-side optical splitter 312 via the backup optical splitter 351 on the backup link. The first terminal-side optical splitter 312 transmits the first backup downstream data stream 420 to the first optical terminal 310. In this example, the first optical terminal 310 occupies a first backup time period and receives the first backup downstream data stream 420. On the time axis, start time of the first backup time period is tb3, end time is tb4, the time tb4 is greater than the time tb3, and the time tb3 is greater than the time ta3. In this embodiment, to ensure that the first optical terminal 310 receives the first main downstream data stream 410 and the first backup downstream data stream 420 in a time division manner, an intersection set between the first main time period and the first backup time period is an empty set on the time axis. When there is a time interval between the first main downstream slot used to send the first main downstream data stream 410 and the first backup downstream slot used to send the first backup downstream data stream 420, there is also a time interval (namely, a time interval between the time tb2 and the time tb3) between the first main time period and the first backup time period. To ensure that the first optical terminal 310 can receive only one downstream data stream at the same time, on the time axis, the start time (namely, the time tb3) of the first backup time period is greater than the end time (namely, the time tb2) of the first main time period. It may be understood that, after receiving the first main downstream data stream 410 completely, the first optical terminal 310 starts to receive the first backup downstream data stream 420 after the time interval between the time tb2 and the time tb3. For a receiving process shown in this embodiment in which the first optical terminal 310 occupies a second main time period and receives the second main downstream data stream, and the first optical terminal 310 occupies a second backup time period and receives the second backup downstream data stream, refer to the process in which the first optical terminal 310 receives the first main downstream data stream 410 and the first backup downstream data stream 420. Details are not described again. To ensure that the first optical terminal 310 receives only one downstream data stream at the same time, and prevent the main downstream data stream and the backup downstream data stream from being transmitted to the first terminal-side optical splitter 312 at the same time, on the time axis, the start time (namely, the time tb3) of the first backup time period is greater than the end time (namely, the time tb2) of the first main time period, the end time (namely, the time tb4) of the first backup time period is less than the start time (namely, the time tb5) of the second main time period, and the start time (namely, the time tb7) of the second backup time period is greater than the end time (namely, the time tb6) of the second main time period.

The following describes a process in which the second optical terminal 360 receives a main downstream data stream and a backup downstream data stream. The main optical splitter 341 performs light splitting on a first main downstream data stream from the main port 302 to obtain one first main downstream data stream and the other first main downstream data stream. The main optical splitter 341 sends, to the first terminal-side optical splitter 312, the one first main downstream data stream obtained through light splitting, for transmitting the one first main downstream data stream to the first optical terminal. The main optical splitter 341 sends, to the main optical splitter 342, the other first main downstream data stream obtained through light splitting. The main optical splitter 342 performs light splitting on the first main downstream data stream from the main optical splitter 341, to obtain one first main downstream data stream and the other first main downstream data stream. The main optical splitter 342 sends, to the second terminal-side optical splitter 361, the one first main downstream data stream obtained through light splitting, for transmitting the one first main downstream data stream to the main optical port of the second optical terminal 360. The main optical splitter 342 sends, to the main optical splitter 343, the other first main downstream data stream obtained through light splitting. For a process in which the second optical terminal 360 receives the second main downstream data stream, refer to the process in which the second optical terminal 360 receives the first main downstream data stream. Details are not described again. For a process in which an optical terminal with low reliability in the optical network receives a downstream data stream, refer to the descriptions of receiving the downstream data stream by the first optical terminal 310. Details are not described again.

The backup optical splitter 351 performs light splitting on a first backup downstream data stream from the backup port 303, to obtain one first backup downstream data stream and the other first backup downstream data stream. The backup optical splitter 351 sends, to the first terminal-side optical splitter 312, the one first backup downstream data stream obtained through light splitting, for transmitting the one first backup downstream data stream to the first optical terminal 310. The backup optical splitter 351 sends, to the backup optical splitter 352, the other first backup downstream data stream obtained through light splitting. The backup optical splitter 352 performs light splitting on a first backup downstream data stream from the backup optical splitter 351, to obtain one first backup downstream data stream and the other first backup downstream data stream. The backup optical splitter 352 sends, to the third terminal-side optical splitter 362, the one first backup downstream data stream obtained through light splitting, for transmitting the one first backup downstream data stream to the backup optical port of the second optical terminal 360. The backup optical splitter 352 sends, to the backup optical splitter 353, the other first backup downstream data stream obtained through light splitting. For a process in which the second optical terminal 360 receives a second backup downstream data stream, refer to the process in which the second optical terminal 360 receives the first backup downstream data stream. Details are not described again. For descriptions of time at which the second optical terminal 360 receives a main downstream data stream and a backup downstream data stream, refer to FIG. 5. Details are not described again. It may be understood that the main optical port and the backup optical port of the second optical terminal 360 receive only one downstream data stream at the same time. For a process in which an optical terminal with high reliability in the optical network receives a downstream data stream, refer to the descriptions of receiving the downstream data stream by the second optical terminal 360. Details are not described again.

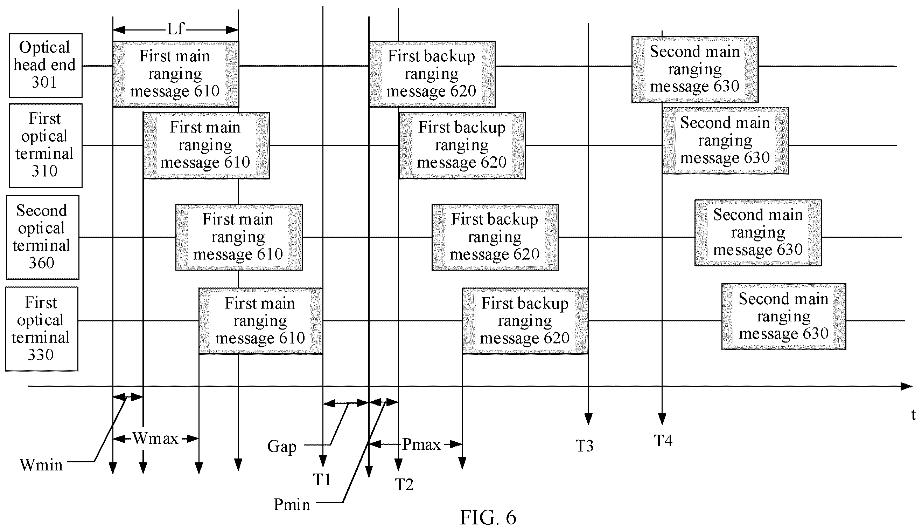

In this embodiment, one downstream data stream (for example, a main downstream data stream or a backup downstream data stream) carries a downstream service sent to each optical terminal. Therefore, the optical head end performs ranging on each optical terminal in the optical network, and obtains duration of a main downstream slot and duration of a backup downstream slot based on a ranging result, to ensure that a main downstream data stream sent by occupying the main downstream slot can carry a downstream service sent to each optical terminal, and also ensure that a backup downstream data stream sent by occupying the backup downstream slot can carry a downstream service sent to each optical terminal. A process in which the optical head end performs ranging on each optical terminal in the optical network is described with reference to FIG. 3 and FIG. 6. FIG. 6 is an example diagram of slots in an embodiment in which the optical head end performs ranging on each optical terminal in the optical network according to this application.

To implement ranging of the main link, the main port 302 of the optical head end 301 occupies a first main ranging slot, and sends a first main ranging message 610 to each optical terminal in the optical network over the main link 340. For descriptions of receiving the first main ranging message 610 by each optical terminal over the main link 340 in the optical network, refer to the foregoing descriptions of receiving the main downstream data stream by each optical terminal over the main link 340. Details are not described again. In the optical network, the first optical terminal 310 is closest to the optical head end 301 over the main link, and the first optical terminal 310 receives the first main ranging message 610 based on a first main delay (Wmin). Wmin is a difference between time at which the first optical terminal 310 receives the first main ranging message 610 and time at which the optical head end sends the first main ranging message 610. In the optical network, the first optical terminal 330 is farthest from the optical head end 301 over the main link. The first optical terminal 330 receives the first main ranging message 610 based on a second main delay (Wmax). Wmax is a difference between time at which the first optical terminal 330 receives the first main ranging message 610 and time at which the optical head end sends the first main ranging message 610. To implement ranging of the backup link, the backup port 303 of the optical head end 301 occupies a first backup ranging slot, and sends a first backup ranging message 620 to each optical terminal in the optical network over the backup link 350. It should be noted that, in this embodiment, an example in which the first main ranging slot is earlier than the first backup ranging slot is used. In another example, the first backup ranging slot may alternatively be earlier than the first main ranging slot. This is not specifically limited in this embodiment. To avoid a conflict occurring when the same optical terminal receives the first main ranging message 610 and the first backup ranging message 620, an intersection set between the first main ranging slot and the backup ranging slot is an empty set on a time axis. For descriptions of receiving the first backup ranging message 620 by each optical terminal over the backup link 350 in the optical network, refer to the foregoing descriptions of receiving the backup downstream data stream by each optical terminal over the backup link 350. Details are not described again. In the optical network, the first optical terminal 310 is closest to the backup port of the optical head end 301 over the backup link, and the first optical terminal 310 receives the first backup ranging message 620 based on a first backup delay (Pmin). Pmin is a difference between time at which the first optical terminal 310 receives the first backup ranging message 620 and time at which the optical head end sends the first backup ranging message 620. In the optical network, the first optical terminal 330 is farthest from the optical head end 301 over the backup link. The first optical terminal 330 receives the first backup ranging message 620 based on a second backup delay (Pmax). Pmax is a difference between time at which the first optical terminal 330 receives the first backup ranging message 620 and time at which the optical head end sends the first backup ranging message 620. The main port 302 of the optical head end 301 occupies a second main ranging slot, and sends a second main ranging message 630 to each optical terminal in the optical network over the main link 340. The first backup ranging slot is earlier than the second main ranging slot, and so on. It may be understood that the optical head end shown in this embodiment sends one main ranging message and one backup ranging message in a manner of being adjacent on the time axis.

The first optical terminal 310 is used as an example. When receiving a first main ranging message over the main link 340, the first optical terminal 310 sends a first main ranging response message to the optical head end 301 based on the first main ranging message over the main link 340. The first main ranging message carries a frame number of the first main ranging message. The first main ranging response message carries the frame number of the first main ranging message, an identifier of the first optical terminal 310, and start time at which the first optical terminal 310 receives the first main ranging message. When receiving the first main ranging response message, the optical head end 301 measures main round-trip time (round-trip time, RTT) between the optical head end 301 and the first optical terminal 310 based on the first main ranging message and the first main ranging response message. Specifically, the optical head end determines, based on the frame number of the first main ranging message, start time at which the optical head end sends the first main ranging message. Start time at which the optical head end 301 receives the first ranging response message from the first optical terminal 310, to calculate the main RTT between the optical head end 301 and the first optical terminal 310. The main RTT between the optical head end 301 and the first optical terminal 310 is equal to a difference between the start time at which the optical head end 301 receives the ranging response message and the start time at which the optical head end 301 sends the first main ranging message. For descriptions of measuring, by the optical head end 301, main RTT between the optical head end 301 and any optical terminal included in the optical network, refer to the descriptions of measuring, by the optical head end 301, the main RTT between the optical head end 301 and the first optical terminal 310. Details are not described again. For a process of measuring backup RTT between the optical head end and each optical terminal by using a backup ranging message and a backup ranging response message, refer to the foregoing process of measuring the main RTT. Details are not described again.

In the optical network, an optical terminal that finally receives the first main ranging message 610 is the first optical terminal 330 farthest from the main port of the optical head end 301. That is, main RTT between the first optical terminal 330 and the optical head end 301 is largest. End time at which the first optical terminal 330 receives the first main ranging message 610 is T1. In the optical network, an optical terminal that first receives the first backup ranging message 620 is the first optical terminal 310 closest to the backup port of the optical head end 301. That is, backup RTT between the first optical terminal 310 and the optical head end 301 is smallest. Start time at which the first optical terminal 310 receives the first backup ranging message 620 is T2. To prevent any optical terminal in the optical network from receiving the main downstream data stream and the backup data stream at the same time, the time T2 is greater than the time T1. In the optical network, an optical terminal that finally receives the first backup ranging message 620 is the first optical terminal 330 farthest to the backup port of the optical head end 301. That is, backup RTT between the first optical terminal 330 and the optical head end 301 is largest. End time at which the first optical terminal 330 receives the first backup ranging message 620 is T3. In the optical network, an optical terminal that first receives the second main ranging message 630 is the first optical terminal 310 closest to the main port of the optical head end 301. That is, main RTT between the first optical terminal 310 and the optical head end 301 is largest. Start time at which the first optical terminal 310 receives the second main ranging message 630 is T4. To prevent any optical terminal in the optical network from receiving the main downstream data stream and the backup data stream at the same time, the time T4 is greater than the time T3. The optical head end can determine duration of a time interval based on the foregoing ranging status. For example, the optical head end sets a maximum slot occupied by each downstream frame (that is, each main ranging message and backup ranging message) to Lf, in other words, a maximum frame length of the first main ranging message 610 is Lf. Time T1=Wmax+Lf, and time T2=Lf+Gap+Pmin+Wmax. Gap is the time interval. Time T3=Lf+Gap+Pmax+Lf+Wmax, and time T4=Gap+Lf+Pmax+Gap+Lf+Wmax. The duration of the time interval is not limited in this embodiment, provided that an intersection set between any main downstream slot and the first backup downstream slot is an empty set on the time axis, and there is a specific time interval between the main downstream slot and the backup downstream slot that are adjacent.

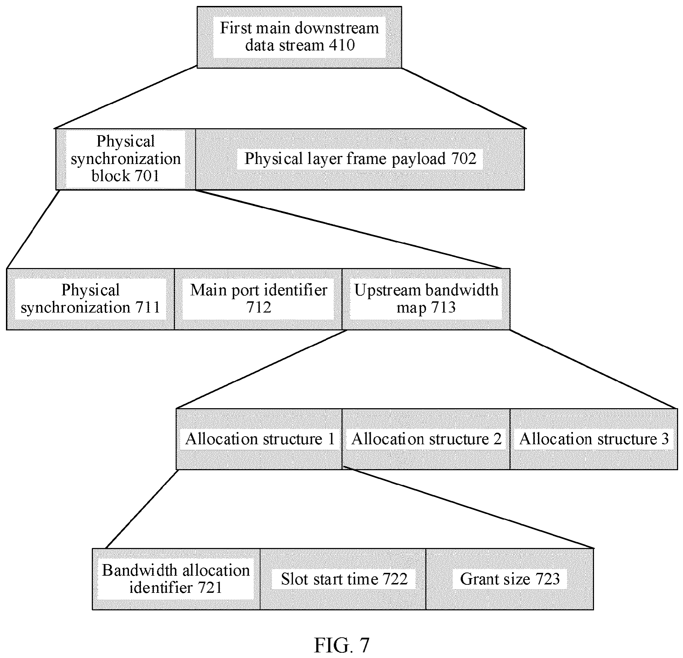

FIG. 7 is an example diagram of a frame structure of an embodiment of a main downstream data stream according to this application. A first main downstream data stream 410 sent by the optical head end is used as an example. The first main downstream data stream 410 includes a physical synchronization block (physical synchronization block, PSBd) 701 and a physical layer frame payload (physical layer frame payload) 702. The physical layer frame payload is briefly referred to as a payload below. The PSBd 701 includes physical synchronization (physical synchronization, PSync) 711, a main port identifier (main port identifier) 712, and an upstream bandwidth map (upstream bandwidth map, US BWmap) field 713. The payload 702 is used to carry a downstream service sent by the optical head end to each optical terminal. When obtaining a downstream data stream that carries the main port identifier 712, the optical terminal determines that the downstream data stream is a main downstream data stream from the main port of the optical head end. The US BWmap field 713 is a slot scheduling message, and the slot scheduling message indicates a main upstream slot occupied by each optical terminal. For example, when the optical network includes three optical terminals, the US BWmap 713 includes three allocation structures (Allocation Structures). Each allocation structure includes a bandwidth allocation identifier (allocation identifier, Alloc-ID) 721, slot start time (start time) 722, and a grant size (Grant size) field 723. If an allocation structure 1 indicates a main upstream slot to a first optical terminal 310, an allocation ID 721 of the allocation structure 1 is used to carry an identity (Identity, ID) that is of the first optical terminal 310 and that is granted to be sent, a start time field indicates start time that is of the main upstream slot and that is allocated to the first optical terminal 310, and a grant size 723 indicates a length that is of the main upstream slot and that is granted to the first optical terminal 310. The first optical terminal occupies the main upstream slot indicated by the allocation structure 1, and sends an upstream service to the optical head end. For descriptions of a frame structure of each main downstream data stream sent by the optical head end, refer to the descriptions of the first main downstream data stream shown in FIG. 7. Details are not described again.

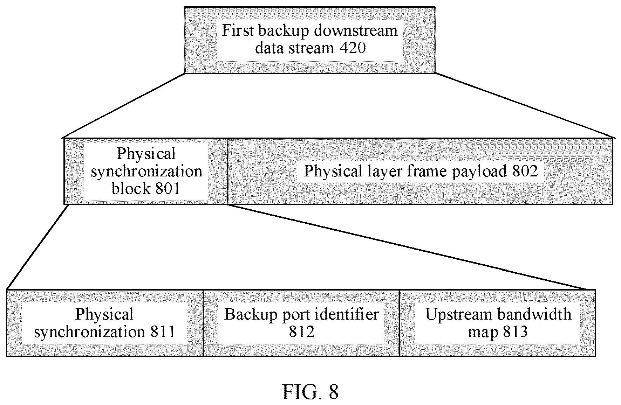

FIG. 8 is an example diagram of a frame structure of an embodiment of a backup downstream data stream according to this application. A first backup downstream data stream 420 sent by the optical head end is used as an example. The first backup downstream data stream 420 includes a PSBd 801 and a physical layer frame payload 802. The PSBd 801 includes PSync 811, a backup port identifier (backup port identifier) 812, and a US BWmap 813. The payload 802 is used to carry a downstream service sent by the optical head end to each optical terminal. For descriptions of the PSync 811 and the US BWmap 813 included in the first backup downstream data stream 420, refer to the descriptions of the first main downstream data stream 410 shown in FIG. 8. Details are not described again. When obtaining a downstream data stream that carries the backup port identifier 812, the optical terminal determines that the downstream data stream is a backup downstream data stream from a backup port of the optical head end. For descriptions of a frame structure of each backup downstream data stream sent by the optical head end, refer to the descriptions of the first backup downstream data stream shown in FIG. 7. Details are not described again. To back up the first main downstream data stream 410 through transmission of the first backup downstream data stream 420, with reference to FIG. 7 and FIG. 8, the downstream service carried in the payload 702 of the first main downstream data stream 410 shown in FIG. 7 is the same as the downstream service carried in the payload 802 of the first backup downstream data stream 420.

The following describes specific scenarios in which an optical network shown in this embodiment implements data transmission.

Scenario 1: With reference to FIG. 3 to FIG. 5, both the main link and the backup link of the optical network shown in this scenario are in a normal working state.

The first optical terminal 310 with the low reliability is used as an example. First, when the main link is in the normal working state, the main port 302 of the optical head end 301 occupies a first main downstream slot, sends a first main downstream data stream 410, and transmits the first main downstream data stream 410 to the optical port 311 of the first optical terminal 310 via the main optical splitter 341 and the first terminal-side optical splitter 312 in sequence. The first optical terminal 310 determines, based on a main port identifier (for details, refer to FIG. 7) carried in the first main downstream data stream 410, that the first main downstream data stream 410 is a downstream data stream from the main port 302 of the optical head end 301. Therefore, the first optical terminal 310 obtains, from the first main downstream data stream 410, a downstream service sent to the first optical terminal 310.

Then, when the backup link is in the normal working state, the backup port 303 of the optical head end 301 occupies a first backup downstream slot, sends a first backup downstream data stream 420, and transmits the first backup downstream data stream 420 to the optical port 311 of the first optical terminal 310 via the backup optical splitter 351 and the first terminal-side optical splitter 312 in sequence. The first optical terminal 310 determines, based on a backup port identifier (for details, refer to FIG. 8) carried in the first backup downstream data stream 420, that the first backup downstream data stream 420 is a downstream data stream from the backup port 303 of the optical head end 301. Because the first optical terminal 310 has successfully received the first main downstream data stream 410, the first optical terminal 310 does not need to process the first backup downstream data stream 420, and discards the first backup downstream data stream 420.

It may be understood that, when both the main link and the backup link included in the optical network are in the normal working state, the first optical terminal with the low reliability can successfully receive the main downstream data stream and the backup downstream data stream in a time division manner. The first optical terminal processes only the main downstream data stream from the main link, and discards the backup downstream data stream from the backup link. When both the main link and the backup link are in the normal working state, for a process in which the second optical terminal 360 with the high reliability receives the main downstream data stream and the backup downstream data stream, refer to the process in which the first optical terminal 310 with the low reliability receives the main downstream data stream and the backup downstream data stream. Details are not described again.

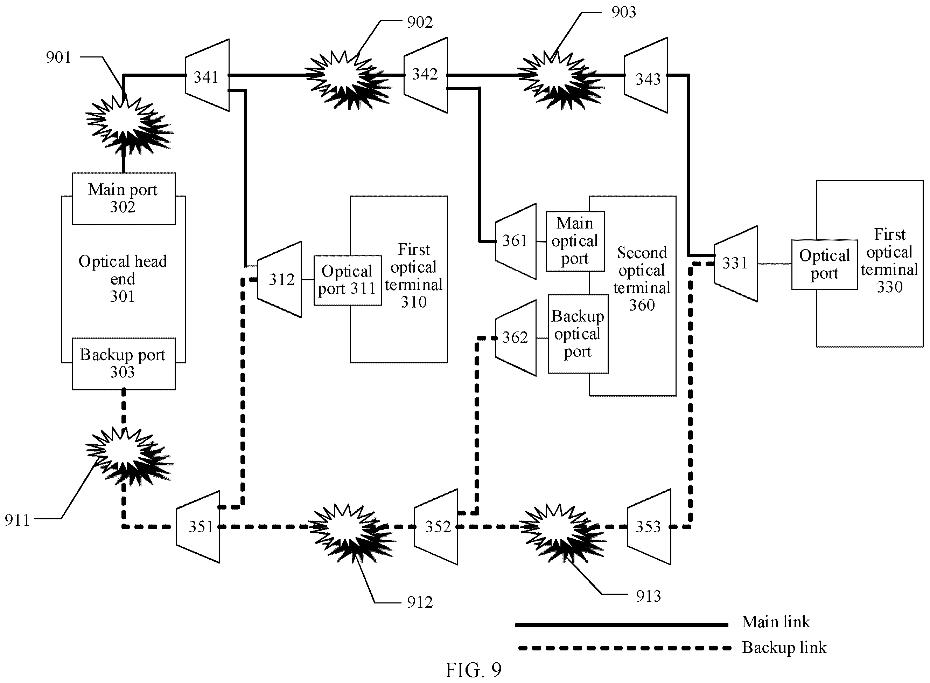

Scenario 2: In the optical network shown in this scenario, the main link is in a faulty state, and the backup link is in a normal working state. FIG. 9 is an example diagram of a fault of a first embodiment of an optical network according to this application.

Example 1: Only a fault point 901 exists on the main link of the optical network. The fault point 901 may be at least one of the following:

The main port 302 of the optical head end 301 is faulty, the optical fiber connected between the main optical splitter 341 and the main port 302 is faulty, the main optical splitter 341 is faulty, the optical fiber connected between the main optical splitter 341 and the first terminal-side optical splitter 312 is faulty, the optical fiber connected between the first terminal-side optical splitter 312 and the optical port of the first optical terminal 310 is faulty, or the optical port of the first optical terminal 310 is faulty. In this example, an example in which the optical fiber connected between the main port 302 and the main optical splitter 341 is faulty is used. It may be understood that, when the fault point 901 exists on the main link of the optical network, the main downstream data stream sent by the main port 302 cannot be successfully transmitted to any optical terminal in the optical network.

The first optical terminal 310 with the low reliability is used as an example. Due to the existence of the fault point 901, the first optical terminal 310 cannot receive the main downstream data stream. Because the backup link shown in this example is in the normal working state, the first optical terminal 310 receives a first backup downstream data stream over the backup link. For descriptions of a process in which the first optical terminal 310 receives the first backup downstream data stream, refer to Example 1. Details are not described again. The first optical terminal 310 shown in this example cannot receive the main downstream data stream that carries a main port identifier (for details, refer to FIG. 7), and can receive only the backup downstream data stream that carries a backup port identifier (for details, refer to FIG. 8). In this case, the first optical terminal 310 processes only the backup downstream data stream, to obtain, from the backup downstream data stream, a downstream service sent to the first optical terminal 310. The second optical terminal 360 with the high reliability is used as another example. Due to the existence of the fault point 901, the second optical terminal 360 cannot receive the main downstream data stream that carries a main port identifier, and can receive only the backup downstream data stream that carries a backup port identifier. In this case, the second optical terminal 360 processes only the backup downstream data stream, to obtain, from the backup downstream data stream, a downstream service sent to the second optical terminal 360.

Example 2: Only a fault point 902 exists on the main link of the optical network. The fault point 902 may be at least one of the following:
The main optical splitter 341 is faulty, the main optical splitter 342 is faulty, the optical fiber connected between the main optical splitter 341 and the main optical splitter 342 is faulty, the optical fiber connected between the main optical splitter 342 and the second terminal-side optical splitter 361 is faulty, the second terminal-side optical splitter 361 is faulty, the optical fiber connected between the second terminal-side optical splitter 361 and the main optical port of the second optical terminal 360 is faulty, or the main optical port of the second optical terminal 360 is faulty. In this example, the optical fiber connected between the main optical splitter 341 and the main optical splitter 342 is faulty. It may be understood that, when the fault point 902 exists on the main link of the optical network, a main downstream data stream sent by the main port 302 can be successfully sent to only some optical terminals. In the example shown in FIG. 9, if the fault point 902 exists in the optical network, the main downstream data stream sent by the main port 302 can be successfully sent to the first optical terminal 310, but cannot be successfully sent to the second optical terminal 360 and the first optical terminal 330. When only the fault point 902 exists on the main link of the optical network, successful receiving of the main downstream data stream and a backup downstream data stream by the first optical terminal 310 is not affected. For a specific process, refer to Scenario 1. Details are not described again. However, the second optical terminal 360 and the first optical terminal 330 can successfully receive only the backup downstream data stream. For a specific process, refer to the process in which each optical terminal receives the backup downstream data stream shown in Example 1. Details are not described again.

Example 3: Only a fault point 903 exists on the main link of the optical network. The fault point 903 may be at least one of the following:
The main optical splitter 343 is faulty, the optical fiber connected between the main optical splitter 342 and the main optical splitter 343 is faulty, the optical fiber connected between the main optical splitter 343 and the first terminal-side optical splitter 331 is faulty, the first terminal-side optical splitter 331 is faulty, the optical fiber connected between the first terminal-side optical splitter 331 and the optical port of the first optical terminal 330 is faulty, or the optical port of the first optical terminal 330 is faulty. In this example, the optical fiber connected between the main optical splitter 342 and the main optical splitter 343 is faulty. It may be understood that, when the fault point 903 exists on the main link of the optical network, a main downstream data stream sent by the main port 302 can be successfully sent to some optical terminals. In the example shown in FIG. 9, if the fault point 903 exists in the optical network, the main downstream data stream sent by the main port 302 can be successfully sent to the first optical terminal 310 and the second optical terminal 360, but cannot be successfully sent to the first optical terminal 330. When only the fault point 903 exists on the main link of the optical network, successful receiving of the main downstream data stream and a backup downstream data stream by the first optical terminal 310 and the second optical terminal 360 is not affected. For a specific process, refer to Scenario 1. Details are not described again. However, the first optical terminal 330 can successfully receive only the backup downstream data stream. For a specific process, refer to the process in which each optical terminal receives the backup downstream data stream shown in Example 1. Details are not described again.

It may be understood that, in this fault scenario, if an optical terminal receives, in a time division manner, a main downstream data stream that carries a main port identifier and a backup downstream data stream that carries a backup port identifier, the optical terminal obtains a downstream service only from the main downstream data stream that carries the main port identifier. If an optical terminal can receive only a backup downstream data stream that carries a backup port identifier, the optical terminal obtains a downstream service only from the backup downstream data stream that carries the backup port identifier.

Scenario 3: In the optical network shown in this scenario, the backup link is in a faulty state, and the main link is in a normal working state.

Example 1: Only a fault point 911 exists on the backup link of the optical network. The fault point 911 may be at least one of the following:
The backup port 303 of the optical head end 301 is faulty, the optical fiber connected between the backup port 303 and the backup optical splitter 351 is faulty, the backup optical splitter 351 is faulty, the optical fiber connected between the backup optical splitter 351 and the first terminal-side optical splitter 312 is faulty, the optical fiber connected between the first terminal-side optical splitter 312 and the optical port of the first optical terminal 310 is faulty, or the optical port of the first optical terminal 310 is faulty. In this example, an example in which the fault point 911 is the fault on the optical fiber connected between the backup port 303 and the backup optical splitter 351 is used. It may be understood that, when the fault point 911 exists on the backup link of the optical network, a backup downstream data stream sent by the backup port 303 cannot be successfully transmitted to any optical terminal in the optical network.

The first optical terminal 310 with the low reliability is used as an example. Due to the existence of the fault point 911, the first optical terminal 310 cannot receive the backup downstream data stream. Because the main link shown in this example is in the normal working state, the first optical terminal 310 receives a first main downstream data stream over the main link. For descriptions of a process in which the first optical terminal 310 receives the first main downstream data stream, refer to Example 1. Details are not described again. The first optical terminal 310 shown in this example cannot receive the backup downstream data stream that carries a backup port identifier (for details, refer to FIG. 8), and can receive only the main downstream data stream that carries a main port identifier (for details, refer to FIG. 7). In this case, the first optical terminal 310 processes only the main downstream data stream, to obtain, from the main downstream data stream, a downstream service sent to the first optical terminal 310. The second optical terminal 360 with the high reliability is used as another example. Due to the existence of the fault point 911, the second optical terminal 360 cannot receive the backup downstream data stream that carries a backup port identifier, and can receive only the main downstream data stream that carries a main port identifier. In this case, the second optical terminal 360 processes only the main downstream data stream, to obtain, from the main downstream data stream, a downstream service sent to the second optical terminal 360.

Example 2: Only a fault point 912 exists on the backup link of the optical network. The fault point 912 may be at least one of the following:
The backup optical splitter 351 is faulty, the backup optical splitter 352 is faulty, the optical fiber connected between the backup optical splitter 351 and the backup optical splitter 352 is faulty, the optical fiber connected between the backup optical splitter 352 and the third terminal-side optical splitter 362 is faulty, the third terminal-side optical splitter 362 is faulty, the optical fiber connected between the third terminal-side optical splitter 362 and the backup optical port of the second optical terminal 360 is faulty, or the backup optical port of the second optical terminal 360 is faulty. In this example, the optical fiber connected between the backup optical splitter 351 and the backup optical splitter 352 is faulty. It may be understood that, when the fault point 912 exists on the backup link of the optical network, a backup downstream data stream sent by the backup port 303 can be successfully sent to only some optical terminals. If the fault point 912 exists in the optical network, the backup downstream data stream sent by the backup port 303 can be successfully sent to the first optical terminal 310, but cannot be successfully sent to the second optical terminal 360 and the first optical terminal 330. When only the fault point 912 exists on the backup link of the optical network, successful receiving of a main downstream data stream and the backup downstream data stream by the first optical terminal 310 is not affected. For a specific process, refer to Scenario 1. Details are not described again. However, the second optical terminal 360 and the first optical terminal 330 can successfully receive only the main downstream data stream. For a specific process, refer to the process in which each optical terminal receives the main downstream data stream shown in Example 1. Details are not described again.

Example 3: Only a fault point 913 exists on the backup link of the optical network. The fault point 913 may be at least one of the following:
The backup optical splitter 353 is faulty, the optical fiber connected between the backup optical splitter 352 and the backup optical splitter 353 is faulty, the optical fiber connected between the backup optical splitter 353 and the first terminal-side optical splitter 331 is faulty, the first terminal-side optical splitter 331 is faulty, the optical fiber connected between the first terminal-side optical splitter 331 and the optical port of the first optical terminal 330 is faulty, or the optical port of the first optical terminal 330 is faulty. In this example, the optical fiber connected between the backup optical splitter 352 and the backup optical splitter 353 is faulty. It may be understood that, when the fault point 913 exists on the backup link of the optical network, the backup downstream data stream sent by the backup port 303 can be successfully sent to some optical terminals. In the example shown in FIG. 9, if the fault point 913 exists in the optical network, the backup downstream data stream sent by the backup port 303 can be successfully sent to the first optical terminal 310 and the second optical terminal 360, but cannot be successfully sent to the first optical terminal 330. When only the fault point 913 exists on the backup link of the optical network, successful receiving of a main downstream data stream and the backup downstream data stream by the first optical terminal 310 and the second optical terminal 360 is not affected. For a specific process, refer to Scenario 1. Details are not described again. However, the first optical terminal 330 can successfully receive only the main downstream data stream. For a specific process, refer to the process in which each optical terminal receives the backup downstream data stream shown in Example 1. Details are not described again.

It may be understood that, in this fault scenario, if an optical terminal receives, in a time division manner, a main downstream data stream that carries a main port identifier and a backup downstream data stream that carries a backup port identifier, the optical terminal obtains a downstream service only from the main downstream data stream that carries the main port identifier. If an optical terminal can receive only a backup downstream data stream that carries a backup port identifier, the optical terminal obtains a downstream service only from the backup downstream data stream that carries the backup port identifier.

In the foregoing embodiment, an example in which the optical network includes the N sequentially arranged optical terminals, and N is any positive integer greater than or equal to 2 is used. Each of the N optical terminals is connected to one main optical splitter included on the main link, and time at which the N optical terminals receive the main downstream data stream is in ascending order. In addition, each of the N optical terminals included in the optical network is connected to one backup optical splitter included on the backup link, and time at which the N optical terminals receive the backup downstream data stream is in descending order. It may be understood that lengths of optical fibers respectively connected between the N optical terminals and the optical head end are in ascending order. Specifically, for example, the optical network includes three sequentially arranged optical terminals: a first optical terminal 310, a second optical terminal 360, and a first optical terminal 330. Time at which the first optical terminal 310, the second optical terminal 360, and the first optical terminal 330 receive the main downstream data stream is in ascending order. It may be understood that, in the three optical terminals, the first optical terminal 310 first receives the main downstream data stream from the optical head end, and the first optical terminal 330 finally receives the main downstream data stream from the optical head end. That is, lengths of optical fibers respectively connected between the first optical terminal 310, the second optical terminal 360, and the first optical terminal 330 and the optical head end are in ascending order. Time at which the first optical terminal 310, the second optical terminal 360, and the first optical terminal 330 receive the backup downstream data stream is in descending order. It may be understood that, in the three optical terminals, the first optical terminal 310 first receives the backup downstream data stream from the optical head end, and the first optical terminal 330 finally receives the main downstream data stream from the optical head end. That is, lengths of optical fibers respectively connected between the first optical terminal 310, the second optical terminal 360, and the first optical terminal 330 and the optical head end are in descending order.

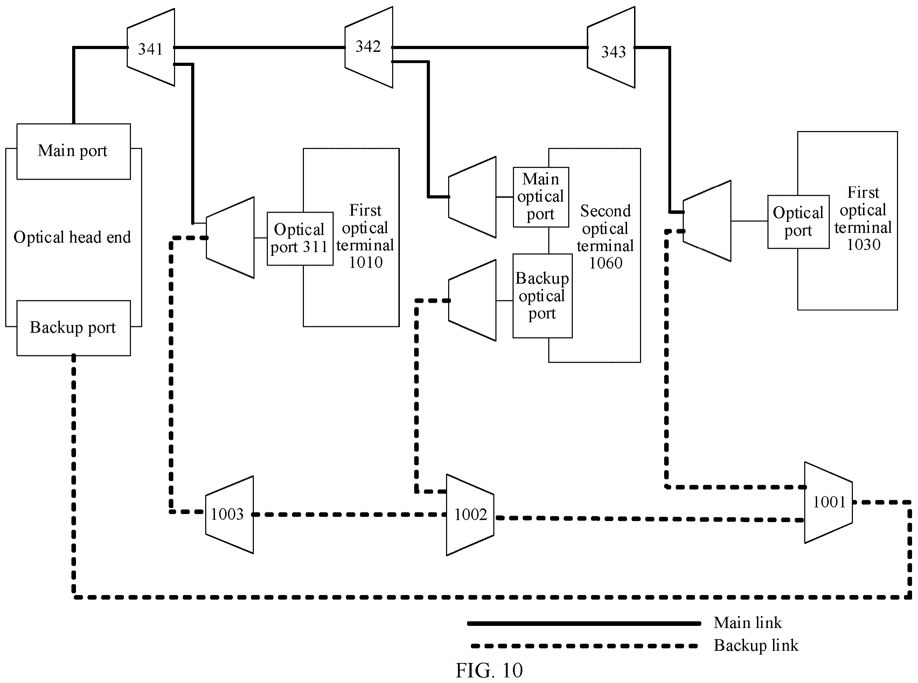

For a connection of the optical network shown in this embodiment, refer to FIG. 10. FIG. 10 is an example diagram of a structure of a second embodiment of an optical network according to this application.

In this embodiment, an example in which the optical network includes the N sequentially arranged optical terminals, and N is any positive integer greater than or equal to 2 is used. Each of the N optical terminals is connected to one main optical splitter included on the main link, and time at which the N optical terminals receive the main downstream data stream is in ascending order. For specific details, refer to the foregoing embodiments. Details are not described again. A difference between this embodiment and the foregoing embodiments is that each of the N optical terminals included in the optical network is connected to one backup optical splitter included on the backup link, and time at which the N optical terminals receive the backup downstream data stream is in descending order. It may be understood that lengths of optical fibers respectively connected between the N optical terminals and the optical head end are in ascending order. The lengths of the optical fibers respectively connected between the N optical terminals and the optical head end are in descending order. Specifically, for example, the optical network includes three sequentially arranged optical terminals: a first optical terminal 1010, a second optical terminal 1060, and a first optical terminal 1030. Time at which the first optical terminal 1010, the second optical terminal 1060, and the first optical terminal 1030 receive the main downstream data stream is in ascending order. For specific details, refer to the foregoing embodiments. Details are not described again. Three backup optical splitters, namely, a backup optical splitter 1003, a backup optical splitter 1002, and a backup optical splitter 1001 are included on a backup link shown in FIG. 10. The first optical terminal 1030 is connected to the backup optical splitter 1001 to connect to the backup link, the second optical terminal 1060 is connected to the backup optical splitter 1002 to connect to the backup link, and the first optical terminal 1010 is connected to the backup optical splitter 1003 to connect to the backup link. Lengths of optical fibers respectively connected between the backup optical splitter 1001, the backup optical splitter 1002, and the backup optical splitter 1003 and the optical head end are in ascending order. In this case, time at which the first optical terminal 1010, the second optical terminal 1060, and the first optical terminal 1030 receive the backup downstream data stream is in ascending order. It may be understood that, in the three optical terminals, the first optical terminal 1010 finally receives the backup downstream data stream from the optical head end, and the first optical terminal 1030 first receives the main downstream data stream from the optical head end. That is, lengths of optical fibers respectively connected between the first optical terminal 1010, the second optical terminal 1060, and the first optical terminal 1030 and the optical head end are in ascending order.

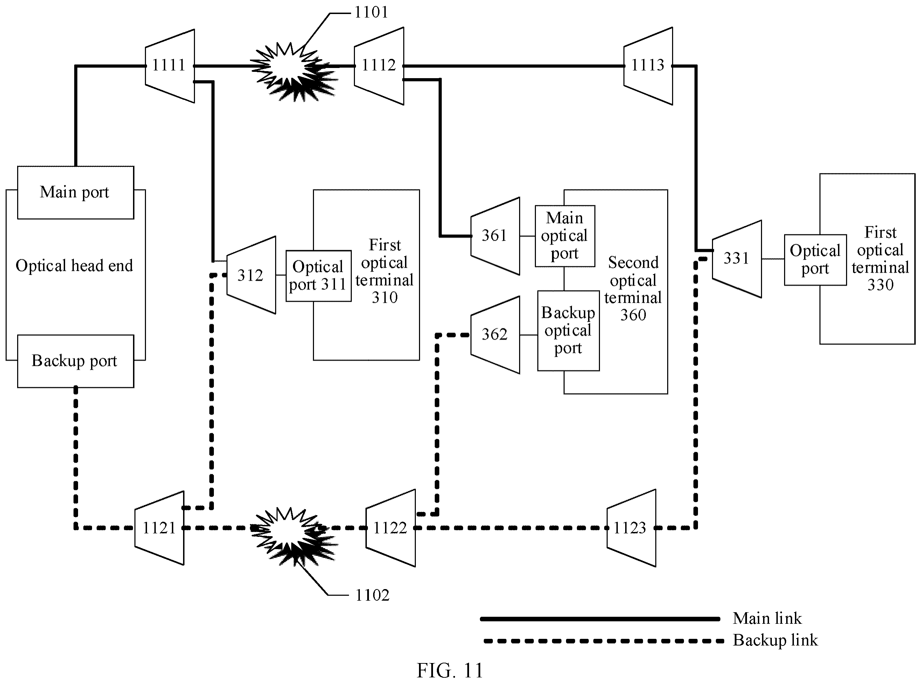

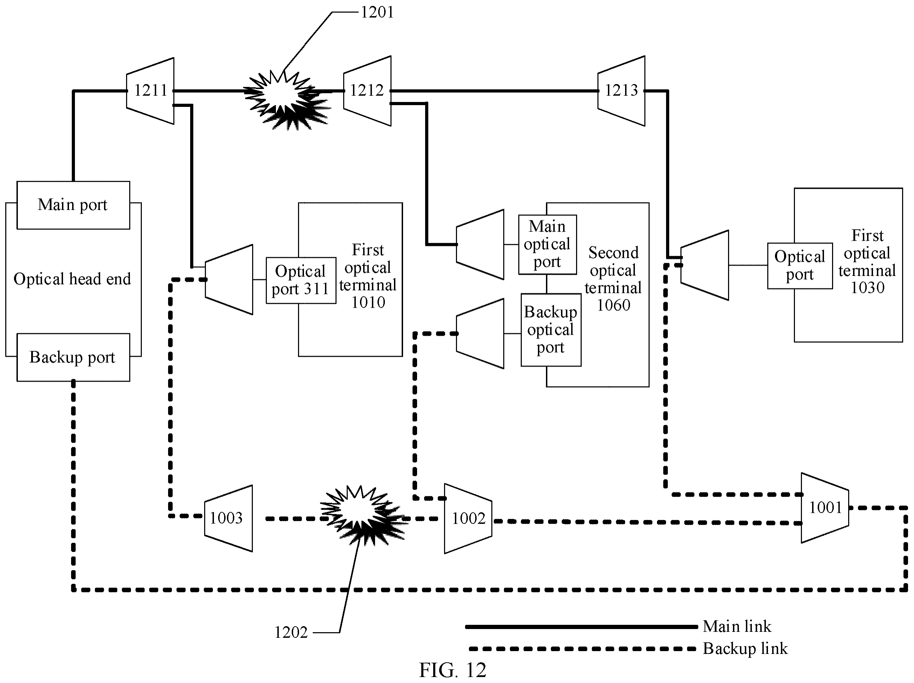

If the optical network shown in this embodiment uses the structure shown in FIG. 10, a quantity of protected optical terminals can be increased when a fault point exists in the optical network. Specifically, with reference to FIG. 11 and FIG. 12, FIG. 11 is an example diagram of a fault in a second embodiment of an optical network according to this application. FIG. 12 is an example diagram of a fault of a third embodiment of an optical network according to this application. Specifically, for the structure of the optical network shown in FIG. 11, refer to the descriptions corresponding to FIG. 3. For a structure of the optical network shown in FIG. 12, refer to the descriptions in FIG. 10. Details are not described again. In FIG. 11, if a fault point 1101 exists on a main link of the optical network, a main downstream data stream sent by the optical head end can be successfully sent to only the first optical terminal 310, but cannot be successfully sent to the second optical terminal 360 and the first optical terminal 330. For specific descriptions, refer to the descriptions corresponding to FIG. 9. Details are not described again. If a fault point 1102 exists on a backup link of the optical network shown in FIG. 11, a backup downstream data stream sent by the optical head end can be successfully sent to only the first optical terminal 310, but cannot be successfully sent to the second optical terminal 360 and the first optical terminal 330. For specific descriptions, refer to the descriptions corresponding to FIG. 9. Details are not described again. Three sequentially arranged main optical splitters (namely, a main optical splitter 1111, a main optical splitter 1112, and a main optical splitter 1113) are included on the main link of the optical network shown in this embodiment. An example in which the fault point 1101 is a fault on an optical fiber connected between the 2^{nd} main optical splitter (namely, the main optical splitter 1112) and the 3^{rd} main optical splitter (namely, the main optical splitter 1113) of the three main optical splitters is used. Three sequentially arranged backup optical splitters (namely, a backup optical splitter 1121, a backup optical splitter 1122, and a backup optical splitter 1123) are also included on the backup link of the optical network shown in this embodiment. An example in which the fault point 1102 is a fault on an optical fiber connected between the 2^{nd} backup optical splitter (namely, the backup optical splitter 1122) and the 3^{rd} backup optical splitter (namely, the backup optical splitter 1123) of the three backup optical splitters is used. Because the fault point 1101 and the fault point 1102 exist in the optical network, the second optical terminal 360 and the first optical terminal 330 cannot receive the main downstream data stream and the backup downstream data stream. Consequently, the second optical terminal 360 and the first optical terminal 330 cannot normally communicate with the optical head end.

In FIG. 12, if a fault point 1201 exists on a main link of the optical network, a main downstream data stream sent by the optical head end can be successfully sent to only the first optical terminal 1010, but cannot be successfully sent to the second optical terminal 1060 and the first optical terminal 1030. For specific descriptions, refer to the descriptions corresponding to FIG. 9. Details are not described again. If a fault point 1202 exists on the backup link of the optical network shown in FIG. 11, the backup downstream data stream sent by the optical head end can be successfully sent to the first optical terminal 1030 and the second optical terminal 1060, but cannot be successfully sent to the first optical terminal 1010. For specific descriptions, refer to the descriptions corresponding to FIG. 10. Details are not described again. A location of a fault point shown in FIG. 12 is the same as a location of the fault point shown in FIG. 11. To be specific, fault points shown in FIG. 12 exist between the 2^{nd} main optical splitter and the 3^{rd} main optical splitter that are included on the main link, and exist between the 2^{nd} backup optical splitter and the 3^{rd} backup optical splitter that are included on the backup link. Specifically, three sequentially arranged main optical splitters (namely, a main optical splitter 1211, a main optical splitter 1212, and a main optical splitter 1213) are included on the main link of the optical network shown in this embodiment. An example in which the fault point 1201 is a fault on an optical fiber connected between the 2^{nd} main optical splitter (namely, the main optical splitter 1212) and the 3^{rd} main optical splitter (namely, the main optical splitter 1213) of the three main optical splitters is used. Three sequentially arranged backup optical splitters (namely, a backup optical splitter 1003, a backup optical splitter 1001, and a backup optical splitter 1001) are also included on the backup link shown in this embodiment. An example in which the fault point 1202 is a fault on an optical fiber connected between the 2^{nd} backup optical splitter (namely, the backup optical splitter 1002) and the 3^{rd} backup optical splitter (namely, the backup optical splitter 1003) of the three backup optical splitters is used. When the fault point 1202 exists in the optical network, a backup downstream data stream sent by the optical head end can be successfully sent to the first optical terminal 1030 and the second optical terminal 1060, but cannot be successfully sent to the first optical terminal 1010.

For better understanding, for descriptions shown in FIG. 11 and FIG. 12, refer to Table 1.

**Table 1**

| Fault point on a main link | Fault point on a backup link | Quantity of faulty optical terminals in a forward connection | Quantity of faulty optical terminals in an opposite connection |
|---|---|---|---|
| Optical fiber connected between the 2^{nd} main optical splitter and the 3^{rd} main optical splitter | Optical fiber connected between the 2^{nd} backup optical splitter and the 3^{rd} backup optical splitter | 2 (namely, a second optical terminal 360 and a first optical terminal 330) | 0 |

All the fault points shown in FIG. 11 and FIG. 12 exist in the optical fiber connected between the 2^{nd} main optical splitter and the 3^{rd} main optical splitter, and the optical fiber connected between the 2^{nd} backup optical splitter and the 3^{rd} backup optical splitter. It may be understood that the fault point on the main link and the fault point on the backup link shown in Table 1 are the same as those in FIG. 11 and FIG. 12. The forward connection shown in Table 1 refers to a connection structure of the optical network shown in FIG. 11. For specific descriptions, refer to FIG. 11. Details are not described again. The faulty optical terminal shown in Table 1 means that at least one of the main downstream data stream and the backup downstream data stream cannot be received. It can be learned from the descriptions shown in FIG. 11 that, when the fault point 1101 and the fault point 1102 exist, both the second optical terminal 360 and the first optical terminal 330 are faulty optical terminals. The opposite connection shown in Table 1 refers to a connection structure of the optical network shown in FIG. 12. For specific descriptions, refer to FIG. 12. Details are not described again. It can be learned from the descriptions shown in FIG. 12 that, when the fault point 1201 and the fault point 1202 exist, there is no faulty optical terminal. It may be understood that, based on the connection structure of the optical network shown in FIG. 12, when the fault point exists in the optical network, the quantity of faulty optical terminals can be effectively reduced.

It can be learned from the foregoing embodiments that the optical head end can obtain main RTT of each optical terminal on the main link and backup RTT of each optical terminal on the backup link. In this case, the optical head end can allocate a main upstream slot based on the main RTT of each optical terminal on the main link. Each optical terminal occupies the main upstream slot allocated by the optical head end, and sends a main upstream data stream to the optical head end. The main upstream data stream is used to carry a main upstream service. Similarly, the optical head end can allocate a backup upstream slot based on the backup RTT of each optical terminal on the backup link. Each optical terminal occupies the backup upstream slot allocated by the optical head end, and sends a backup upstream data stream to the optical head end. The backup upstream data stream is used to carry a backup upstream service. The main upstream service is the same as the backup upstream service, to back up the main upstream service through transmission of the backup upstream service. For example, as shown in FIG. 10, the optical head end allocates a first main upstream slot based on main RTT of the first optical terminal 1010. The optical head end allocates a second main upstream slot based on main RTT of the second optical terminal 1060. The optical head end allocates a third main upstream slot based on main RTT of the first optical terminal 1030. The first main upstream slot, the second main upstream slot, and the third main upstream slot are separated from each other on a time axis. It may be understood that there is no overlapping time period between the first main upstream slot, the second main upstream slot, and the third main upstream slot on the time axis. The first optical terminal 1010 is used as an example. The first optical terminal occupies the first main upstream slot, and sends a first upstream data stream to the optical head end over the main link. The first upstream data stream carries an identifier of the first optical terminal. For descriptions of occupying, by the first optical terminal 1010, the second optical terminal 1060, and the first optical terminal 1030, backup upstream slots, and sending backup upstream data streams to the optical head end, refer to the descriptions of occupying, by each optical terminal, the main upstream slot, and sending the main upstream data stream to the optical head end. Details are not described again. It may be understood that the first optical terminal 1010 can occupy a first backup upstream slot, and send a first backup upstream data stream to the optical head end. The first optical terminal 1010 occupies the first main upstream slot, and the first main upstream data stream sent to the optical head end carries an identifier of the first optical terminal 1010. Similarly, the first optical terminal 1010 occupies the first backup upstream slot, the first backup upstream data stream sent to the optical head end carries the identifier of the first optical terminal 1010.

If there is no fault point in the optical network, the main port of the optical head end occupies the first upstream slot and receives the identifier of the first optical terminal 1010, and occupies the first backup upstream slot and receives the identifier of the first optical terminal 1010. The optical head end processes the first main upstream data stream that carries the identifier of the first optical terminal 1010, to obtain an upstream service from the first optical terminal 1010, and discards the first backup upstream data stream that carries the identifier of the first optical terminal 1010. If there is a fault point in the optical network, the optical head end can occupy only the first upstream slot and receive the first upstream data stream, but cannot receive the first backup upstream data stream. In this case, the optical head end processes the first upstream data stream to obtain the upstream service from the first optical terminal 1010. For descriptions of the fault point in the optical network, refer to the descriptions corresponding to FIG. 9. Details are not described again. Similarly, if there is a fault point in the optical network, the optical head end can occupy only the first backup upstream slot and receive the first backup upstream data stream, but cannot receive the first main upstream data stream. In this case, the optical head end processes only the first backup upstream data stream to obtain the upstream service from the first optical terminal 1010. If there is a fault point in the optical network, the optical head end can occupy only the first main upstream slot and receive the first main upstream data stream, but cannot receive the first backup upstream data stream. In this case, the optical head end processes only the first main upstream data stream to obtain the upstream service from the first optical terminal 1010. For descriptions of receiving, by the optical head end, an upstream service of any optical terminal in the optical network, refer to the descriptions of receiving, by the optical head end, the upstream service from the first optical terminal 1010. Details are not described again.

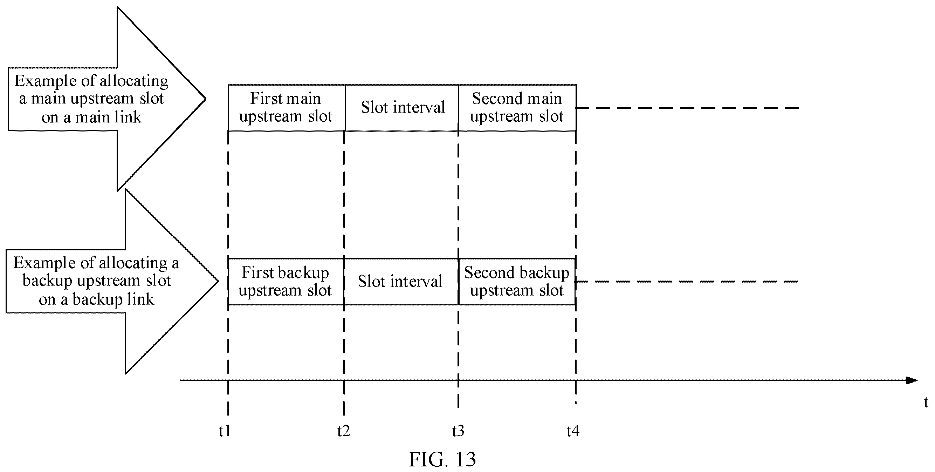

For an example in which the optical head end allocates the upstream slot to each optical terminal in this embodiment, refer to FIG. 10 and FIG. 13. FIG. 13 is an example diagram of allocating upstream slots according to this application. The optical head end allocates a first main upstream slot to the first optical terminal 1010 based on main RTT of the first optical terminal 1010. Start time of the first main upstream slot is time t1, and end time is time t2. The optical head end allocates a second main upstream slot to the second optical terminal 1060 based on main RTT of the second optical terminal 1060. Start time of the second main upstream slot is time t3, and end time is time t4. A time period between the time t2 and the time t3 is a time interval between the first main upstream slot and the second main upstream slot. Similarly, the optical head end allocates a first backup upstream slot to the first optical terminal 1010 based on backup RTT of the first optical terminal 1010. Start time of the first backup upstream slot is time t1, and end time is time t2. It may be understood that, in this embodiment, an example in which the start time and the end time of the first main upstream slot are both the same as those of the first backup slot is used. In this embodiment, an example in which a duration period of the first main upstream slot and a duration period of the first backup upstream slot overlap with each other is used. In another example, the duration period of the first main upstream slot and the duration period of the first backup upstream slot may partially overlap. This is not specifically limited in this embodiment. For descriptions of a main upstream slot and a backup upstream slot that are allocated by the optical head end to any optical terminal, refer to the descriptions of the first main upstream slot and the first backup upstream slot. Details are not described again.

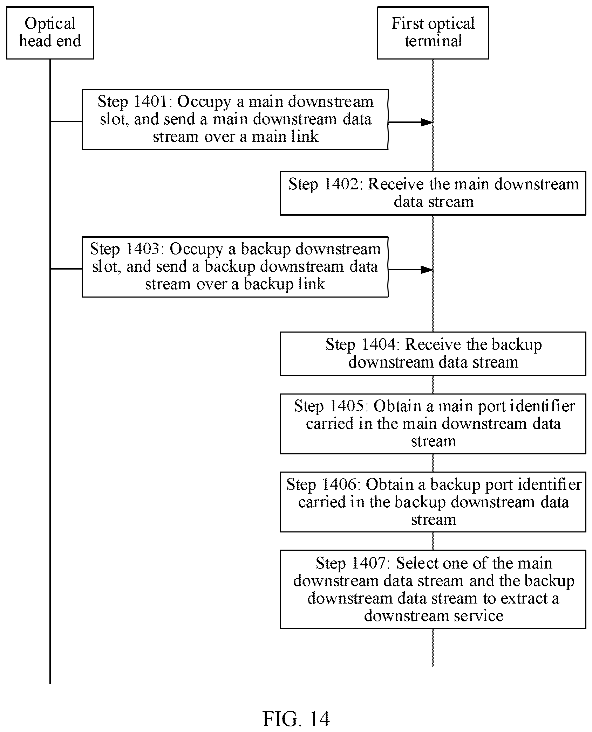

FIG. 14 is a flowchart of steps of a first embodiment of a data transmission method according to this application. According to the method shown in this embodiment, an optical head end can send a downstream service to a first optical terminal with low reliability.

Step 1401: The optical head end occupies a main downstream slot, and sends a main downstream data stream to the first optical terminal over a main link.

Specifically, the optical head end occupies the main downstream slot, and sends the main downstream data stream to a first terminal-side optical splitter over the main link, where the first terminal-side optical splitter is configured to connect the main link and the first optical terminal; and the first terminal-side optical splitter sends the main downstream data stream to the first optical terminal.

Step 1402: The first optical terminal occupies a main time period, and receives the main downstream data stream from the optical head end over the main link.

Step 1403: The optical head end occupies a backup downstream slot, and sends a backup downstream data stream to the first optical terminal over a backup link.

Specifically, the optical head end occupies the backup downstream slot, and sends the backup downstream data stream to the first terminal-side optical splitter over the backup link, where the first terminal-side optical splitter is configured to connect the backup link and the first optical terminal. The first terminal-side optical splitter sends the backup downstream data stream to the first optical terminal. An intersection set between the main downstream slot and the backup downstream slot is an empty set on a time axis.

Step 1404: The first optical terminal occupies a backup time period, and receives the backup downstream data stream from the optical head end over the backup link.

To ensure that the first optical terminal receives the main downstream data stream and the backup downstream data stream in a time division manner, an intersection set between the main time period and the backup time period is an empty set on the time axis.

Step 1405: The first optical terminal obtains a main port identifier carried in the main downstream data stream.

The main port identifier identifies a main port of the optical head end, and the main port is used to send the main downstream data stream over the main link.

Step 1406: The first optical terminal obtains a backup port identifier carried in the backup downstream data stream.

The backup port identifier identifies a backup port of the optical head end, and the backup port is used to send the backup downstream data stream over the backup link.

Step 1407: The first optical terminal selects one of the main downstream data stream and the backup downstream data stream to extract the downstream service.

For example, if obtaining only the main port identifier, the first optical terminal extracts the downstream service from the main downstream data stream. For another example, if obtaining only the backup port identifier, the first optical terminal extracts the downstream service from the backup downstream data stream. For another example, if obtaining the main port identifier and the backup port identifier, the first optical terminal extracts the downstream service from the main downstream data stream.

For descriptions of a structure of an optical network to which the method shown in this embodiment is applied and a specific process of performing the data transmission method, refer to the foregoing descriptions in the foregoing embodiments. Details are not described again.

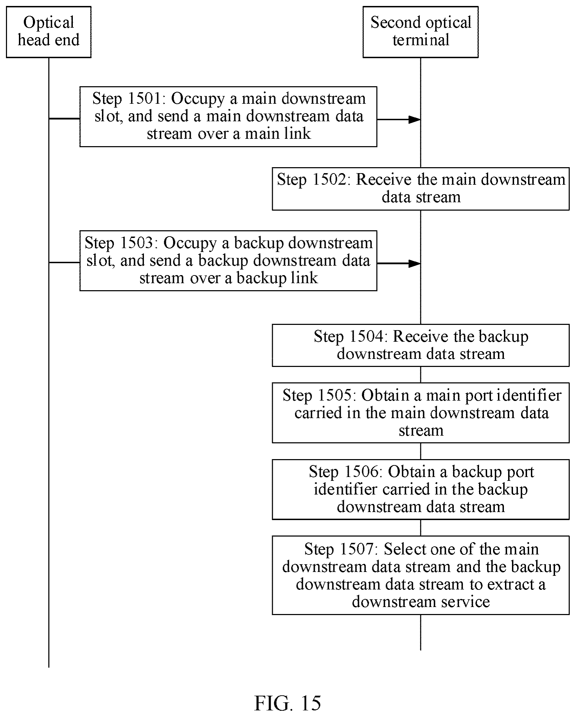

FIG. 15 is a flowchart of steps of a second embodiment of a data transmission method according to this application. According to the method shown in this embodiment, an optical head end can send a downstream service to a second optical terminal with low reliability.

Step 1501: The optical head end occupies a main downstream slot, and sends a main downstream data stream to the second optical terminal over a main link.

Specifically, the optical head end occupies the main downstream slot, and sends the main downstream data stream to a second terminal-side optical splitter over the main link, where the second terminal-side optical splitter is configured to connect the main link and the second optical terminal. The second terminal-side optical splitter sends the main downstream data stream to the second optical terminal.

Step 1502: The second optical terminal occupies a main time period, and receives the main downstream data stream from the optical head end over the main link.

Step 1503: The optical head end occupies a backup downstream slot, and sends a backup downstream data stream to the second optical terminal over a backup link.

Specifically, the optical head end occupies the backup downstream slot, and sends the backup downstream data stream to a third terminal-side optical splitter over the backup link, where the third terminal-side optical splitter is configured to connect the backup link and the second optical terminal. The third terminal-side optical splitter sends the backup downstream data stream to the second optical terminal. An intersection set between the main downstream slot and the backup downstream slot is an empty set on a time axis.

Step 1504: The second optical terminal occupies a backup time period, and receives the backup downstream data stream from the optical head end over the backup link.

Step 1505: The second optical terminal obtains a main port identifier carried in the main downstream data stream.

Step 1506: The second optical terminal obtains a backup port identifier carried in the backup downstream data stream.

Step 1507: The second optical terminal selects one of the main downstream data stream and the backup downstream data stream to extract the downstream service.

For descriptions of an execution process of step 1504 to step 1507 shown in this embodiment, refer to the descriptions of step 1401 to step 1407 corresponding to FIG. 14. Details are not described again.

For descriptions of a structure of an optical network to which the method shown in this embodiment is applied and a specific process of performing the data transmission method, refer to the foregoing descriptions in the foregoing embodiments. Details are not described again.

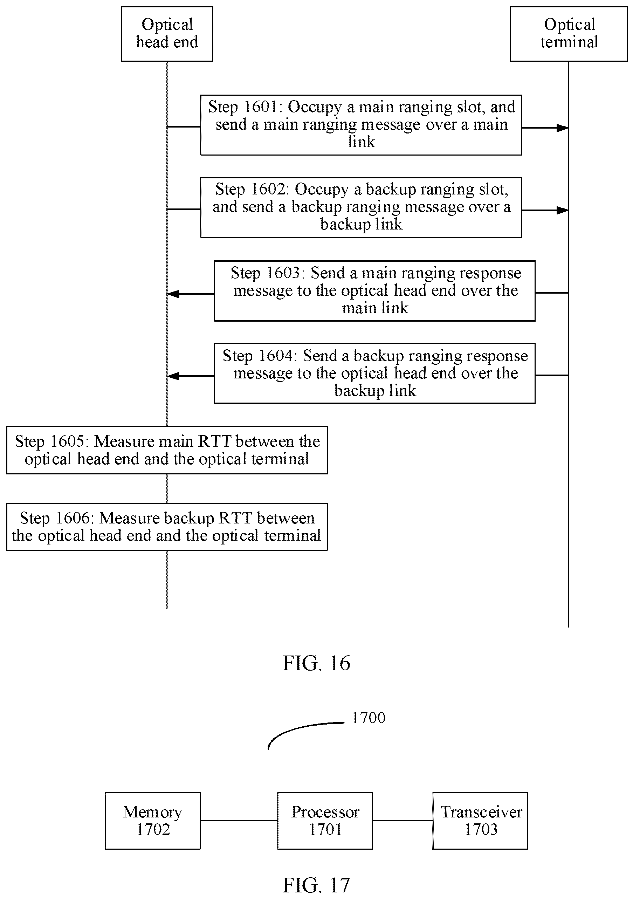

FIG. 16 is a flowchart of steps of a third embodiment of a data transmission method according to this application. According to the method shown in this embodiment, an optical head end can measure RTT of each optical terminal, to obtain a main downstream slot and a backup downstream slot.

Step 1601: The optical head end occupies a main ranging slot, and sends a main ranging message to the optical terminal over a main link.

The optical terminal shown in this embodiment may be a first optical terminal with low reliability, or may be a second optical terminal with high reliability.

Step 1602: The optical head end occupies a backup ranging slot, and sends a backup ranging message to the optical terminal over a backup link.

An intersection set between the main ranging slot and the backup ranging slot is an empty set.

Step 1603: The optical terminal sends a main ranging response message to the optical head end over the main link based on the main ranging message.

Step 1604: The optical terminal sends a backup ranging response message to the optical head end over the backup link based on the backup ranging message.

Step 1605: The optical head end measures main RTT between the optical head end and the optical terminal based on the main ranging message and the main ranging response message.

Step 1606: The optical head end measures backup RTT between the optical head end and the optical terminal based on the backup ranging message and the backup ranging response message.

For specific descriptions of a ranging process shown in this embodiment, refer to the descriptions corresponding to FIG. 8. Details are not described again.

An embodiment of this application provides an optical communication device. For a structure of the optical communication device, refer to FIG. 17. FIG. 17 is an example diagram of a structure of a first embodiment of an optical communication device according to this application.

The optical communication device 1700 shown in this embodiment includes a processor 1701, a memory 1702, and a transceiver 1703. The processor 1701 is separately connected to the memory 1702 and the transceiver 1703. The memory 1702 shown in this embodiment is of an optional structure, that is, the optical communication device 1700 may not include the memory 1702. The optical communication device 1700 is externally connected to the memory 1702. The transceiver 1703 may implement both a data receiving function and a data sending function, implement only the data sending function, or implement only the data receiving function. The processor 1701 may include at least one of an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, or a neural network processing unit (neural network processing unit, NPU). The transceiver 1703 receives an electromagnetic wave, performs frequency modulation and filtering processing on an electromagnetic wave signal, and sends a processed signal to the processor 1701. The transceiver 1703 may further receive a to-be-sent signal from the processor 1701, perform frequency modulation and amplification on the signal, and convert the signal into an electromagnetic wave for radiation. The memory 1702 stores program instructions.

If the optical communication device 1700 shown in this embodiment is an optical head end, in the embodiments shown in FIG. 14 and FIG. 15, the processor 1701 invokes a computer-readable storage medium in the memory 1702, to obtain a main downstream data stream, and further obtain start time and end time of a main downstream slot. The processor 1701 sends, to the transceiver 1703, the main downstream data stream and indicates the start time and the end time of the main downstream slot. The transceiver 1703 is configured to perform step 1401 and step 1501. The processor 1701 obtains a backup downstream data stream, and further obtains start time and end time of a backup downstream slot. The processor 1701 sends the backup downstream data stream to the transceiver 1703 and indicates the start time and the end time of the backup downstream slot. The transceiver 1703 is configured to perform step 1403 and step 1503. In the embodiment shown in FIG. 16, the processor 1701 invokes the computer-readable storage medium in the memory 1702, to obtain a main ranging message, and further obtain start time and end time of a main ranging slot. The processor 1701 sends the main ranging message to the transceiver 1703 and indicates the start time and the end time of the main ranging slot. The transceiver 1703 is configured to perform step 1601. The processor 1701 obtains a backup ranging message, and further obtains start time and end time of a backup ranging slot. The processor 1701 sends the backup ranging message to the transceiver 1703 and indicates the start time and the end time of the backup ranging slot. The transceiver 1703 is configured to perform step 1602. The processor 1701 is further configured to perform step 1605 and step 1606.

The optical communication device 1700 shown in this embodiment is a first optical terminal. In the embodiment shown in FIG. 14, the transceiver 1703 is configured to perform step 1402 and step 1404. The processor 1701 is configured to perform step 1405 to step 1407. In the embodiment shown in FIG. 16, the transceiver 1703 is configured to perform step 1603 and step 1604. The optical communication device 1700 shown in this embodiment is a second optical terminal. In the embodiment shown in FIG. 15, the transceiver 1703 is configured to perform step 1502 and step 1504. The processor 1701 is configured to perform step 1505 to step 1507. In the embodiment shown in FIG. 16, the transceiver 1703 is configured to perform step 1603 and step 1604.

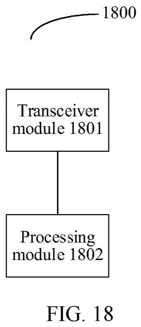

An embodiment further provides an optical communication device shown in FIG. 18. FIG. 18 describes a structure of the optical communication device from a perspective of a functional module. FIG. 18 is an example diagram of a structure of a second embodiment of an optical communication device according to this application. The optical communication device 1800 shown in this embodiment includes a transceiver module 1801 and a processing module 1802 connected to the transceiver module 1801. If the optical communication device 1800 shown in this embodiment is an optical head end, the transceiver module 1801 is configured to perform receiving and sending-related steps in any one of the embodiments in FIG. 14, FIG. 15, and FIG. 16, and the processing module 1802 is configured to perform processing-related steps in any one of the embodiments in FIG. 14, FIG. 15, and FIG. 16. If the optical communication device 1800 shown in this embodiment is a first optical terminal with low reliability, the transceiver module 1801 is configured to perform receiving and sending-related steps in any one of the embodiments in FIG. 14 and FIG. 16, and the processing module 1802 is configured to perform processing-related steps in any one of the embodiments in FIG. 14 and FIG. 16. If the optical communication device 1800 shown in this embodiment is a second optical terminal with high reliability, the transceiver module 1801 is configured to perform receiving and sending-related steps in any one of the embodiments in FIG. 15 and FIG. 16. The processing module 1802 is configured to perform processing-related steps in any one of the embodiments in FIG. 15 and FIG. 16.

An embodiment of this application further provides a computer-readable storage medium. The computer storage medium stores a computer program, the computer program includes program instructions, and when the program instructions are executed by a processor, the processor is caused to perform the method shown in any one of the method embodiments in FIG. 14, FIG. 15, and FIG. 16.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications and replacements do not make the essence of the corresponding technical solutions depart from the spirit and the scope of the technical solutions of embodiments of this application.

## Claims

1. A data transmission method, wherein the method comprises:
occupying, by an optical head end, a main downstream slot, and sending a main downstream data stream to an optical terminal over a main link, wherein the main link is used to connect the optical terminal and the optical head end; and
occupying, by the optical head end, a backup downstream slot, and sending a backup downstream data stream to the optical terminal over a backup link, wherein the backup link is used to connect the optical terminal and the optical head end, the main link is different from the backup link, and an intersection set between the main downstream slot and the backup downstream slot is an empty set on a time axis.

2. The method according to claim 1, wherein the optical terminal comprises a first optical terminal, and occupying, by the optical head end, the main downstream slot, and sending the main downstream data stream to the optical terminal over the main link comprise:
occupying, by the optical head end, the main downstream slot, and sending the main downstream data stream to a first terminal-side optical splitter over the main link, wherein the first terminal-side optical splitter is configured to connect the main link and the first optical terminal; and
occupying, by the optical head end, the backup downstream slot, and sending the backup downstream data stream to the optical terminal over the backup link comprise:
occupying, by the optical head end, the backup downstream slot, and sending the backup downstream data stream to the first terminal-side optical splitter over the backup link, wherein the first terminal-side optical splitter is configured to connect the backup link and the first optical terminal.

3. The method according to claim 1 or 2, wherein the optical terminal comprises a second optical terminal, and occupying, by the optical head end, the main downstream slot, and sending the main downstream data stream to the optical terminal over the main link comprise:
occupying, by the optical head end, the main downstream slot, and sending the main downstream data stream to a second terminal-side optical splitter over the main link, wherein the second terminal-side optical splitter is configured to connect the main link and the second optical terminal; and
occupying, by the optical head end, the backup downstream slot, and sending the backup downstream data stream to the optical terminal over the backup link comprise:
occupying, by the optical head end, the backup downstream slot, and sending the backup downstream data stream to a third terminal-side optical splitter over the backup link, wherein the third terminal-side optical splitter is configured to connect the backup link and the second optical terminal, and the second terminal-side optical splitter is different from the third terminal-side optical splitter.

4. The method according to any one of claims 1 to 3, wherein the main downstream data stream is used to carry a main port identifier, the backup downstream data stream is used to carry a backup port identifier, the main port identifier identifies a main port of the optical head end, the main port is used to send the main downstream data stream over the main link, the backup port identifier identifies a backup port of the optical head end, and the backup port is used to send the backup downstream data stream over the backup link; and the main port identifier and the backup port identifier indicate the optical terminal to extract a downstream service from the main downstream data stream or the backup downstream data stream.

5. The method according to any one of claims 1 to 4, wherein before occupying, by the optical head end, the main downstream slot, and sending the main downstream data stream to the optical terminal over the main link, the method further comprises:
occupying, by the optical head end, a main ranging slot, and sending a main ranging message to the optical terminal over the main link, wherein the main ranging message is used to measure main round-trip time RTT between the optical head end and the optical terminal; and
before occupying, by the optical head end, the backup downstream slot, and sending the backup downstream data stream to the optical terminal over the backup link, the method further comprises:
occupying, by the optical head end, a backup ranging slot, and sending a backup ranging message to the optical terminal over the backup link, wherein the backup ranging message is used to measure backup RTT between the optical head end and the optical terminal, and an intersection set between the main ranging slot and the backup ranging slot is an empty set on a time axis.

6. The method according to any one of claims 1 to 5, wherein the main downstream slot comprises a first main downstream slot and a second main downstream slot, the backup downstream slot comprises a first backup downstream slot and a second backup downstream slot, and occupying, by the optical head end, the main downstream slot, and sending the main downstream data stream to the optical terminal over the main link comprise:
separately occupying, by the optical head end, the first main downstream slot and the second main downstream slot, and sending a first main downstream data stream and a second main downstream data stream to the optical terminal; and
occupying, by the optical head end, the backup downstream slot, and sending the backup downstream data stream to the optical terminal over the backup link comprise:
separately occupying, by the optical head end, the first backup downstream slot and the second backup downstream slot, and sending a first backup downstream data stream and a second backup downstream data stream to the optical terminal, wherein
the first main downstream slot, the first backup downstream slot, the second main downstream slot, and the second backup downstream slot are sequentially arranged on a time axis, and there is a time interval between any two adjacent downstream slots in the first main downstream slot, the first backup downstream slot, the second main downstream slot, and the second backup downstream slot.

7. A data transmission method, wherein the method comprises:
occupying, by an optical terminal, a main time period, and receiving a main downstream data stream from an optical head end over a main link, wherein the main link is used to connect the optical terminal and the optical head end; and/or
occupying, by the optical terminal, a backup time period, and receiving a backup downstream data stream from the optical head end over a backup link, wherein the backup link is used to connect the optical terminal and the optical head end, the optical terminal is separately connected to the main link and the backup link via a same terminal-side optical splitter, and an intersection set between the main time period and the backup time period is an empty set on a time axis.

8. The method according to claim 7, wherein after occupying, by the optical terminal, the main time period, and receiving the main downstream data stream from the optical head end over the main link, the method further comprises:
obtaining, by the optical terminal, a main port identifier carried in the main downstream data stream, wherein the main port identifier identifies a main port of the optical head end, and the main port is used to send the main downstream data stream over the main link; and
after occupying, by the optical terminal, the backup time period, and receiving the backup downstream data stream from the optical head end over the backup link, the method further comprises:
obtaining, by the optical terminal, a backup port identifier carried in the backup downstream data stream, wherein the backup port identifier identifies a backup port of the optical head end, and the backup port is used to send the backup downstream data stream over the backup link; and
extracting, by the optical terminal, a downstream service from the main downstream data stream that carries the main port identifier.

9. The method according to claim 7, wherein after occupying, by the optical terminal, the main time period, and receiving the main downstream data stream from the optical head end over the main link, the method further comprises:
if obtaining only a main port identifier, extracting, by the optical terminal, a downstream service from the main downstream data stream, wherein the main port identifier identifies a main port of the optical head end, and the main port is used to send the main downstream data stream over the main link.

10. The method according to claim 7, wherein after occupying, by the optical terminal, the backup time period, and receiving the backup downstream data stream from the optical head end over the backup link, the method further comprises:
if obtaining only a backup port identifier, extracting, by the optical terminal, a downstream service from the backup downstream data stream, wherein the backup port identifier identifies a backup port of the optical head end, and the backup port is used to send the backup downstream data stream over the backup link.

11. The method according to any one of claims 7 to 10, wherein before occupying, by the optical terminal, the main time period, and receiving the main downstream data stream from the optical head end over the main link, the method further comprises:
occupying, by the optical terminal, a main ranging time period, and receiving a main ranging message from the optical head end over the main link, wherein the main ranging message is used to measure main round-trip time RTT between the optical head end and the optical terminal; and
before occupying, by the optical terminal, the backup time period, and receiving the backup downstream data stream from the optical head end over the backup link, the method further comprises:
occupying, by the optical terminal, a backup ranging time period, and receiving a backup ranging message from the optical head end over the backup link, wherein the backup ranging message is used to measure backup RTT between the optical head end and the optical terminal, and an intersection set between the main ranging time period and the backup ranging time period is an empty set on a time axis.

12. The method according to any one of claims 7 to 11, wherein the main time period comprises a first main time period and a second main time period, the backup time period comprises a first backup time period and a second backup time period, and occupying, by the optical terminal, the main time period, and receiving the main downstream data stream from the optical head end over the main link comprise:
separately occupying, by the optical terminal, the first main time period and the second main time period, and receiving a first main downstream data stream and a second main downstream data stream from the optical head end over the main link; and
occupying, by the optical terminal, the backup time period, and receiving the backup downstream data stream from the optical head end over the backup link comprise:
separately occupying, by the optical terminal, the first backup time period and the second backup time period, and receiving the first backup downstream data stream and the second backup downstream data stream from the optical head end over the backup link, wherein
the first main time period, the first backup time period, the second main time period, and the second backup time period are sequentially arranged on a time axis, and there is a time interval between any two adjacent time periods of the first main time period, the first backup time period, the second main time period, and the second backup time period.

13. A data transmission method, wherein the method is applied to an optical network, the optical network comprises an optical head end, a main link, a backup link, a terminal-side optical splitter, and an optical terminal, and the method comprises:
occupying, by the optical head end, a main downstream slot, and sending a main downstream data stream to the terminal-side optical splitter over the main link, wherein the main link is used to connect the terminal-side optical splitter and the optical head end; and
sending, by the terminal-side optical splitter, the main downstream data stream to the optical terminal; and
occupying, by the optical head end, a backup downstream slot, and sending a backup downstream data stream to the terminal-side optical splitter over the backup link, wherein the backup link is used to connect the terminal-side optical splitter and the optical head end, the main link is different from the backup link, and an intersection set between the main downstream slot and the backup downstream slot is an empty set on a time axis; and
sending, by the terminal-side optical splitter, the backup downstream data stream to the optical terminal.

14. The method according to claim 13, wherein the optical terminal comprises a first optical terminal, the terminal-side optical splitter comprises a first terminal-side optical splitter, and occupying, by the optical head end, the main downstream slot, and sending the main downstream data stream to the terminal-side optical splitter over the main link comprise:
occupying, by the optical head end, the main downstream slot, and sending the main downstream data stream to the first terminal-side optical splitter over the main link, wherein the first terminal-side optical splitter is configured to connect the main link and the first optical terminal; and
sending, by the terminal-side optical splitter, the main downstream data stream to the optical terminal comprises:
sending, by the first terminal-side optical splitter, the main downstream data stream to the first optical terminal; and
occupying, by the optical head end, the backup downstream slot, and sending the backup downstream data stream to the terminal-side optical splitter over the backup link comprise:
occupying, by the optical head end, the backup downstream slot, and sending the backup downstream data stream to the first terminal-side optical splitter over the backup link, wherein the first terminal-side optical splitter is configured to connect the backup link and the first optical terminal; and
sending, by the terminal-side optical splitter, the backup downstream data stream to the optical terminal comprises:
sending, by the first terminal-side optical splitter, the backup downstream data stream to the first optical terminal.

15. The method according to claim 13 or 14, wherein the optical terminal comprises a second optical terminal, the terminal-side optical splitter comprises a second terminal-side optical splitter and a third terminal-side optical splitter, and occupying, by the optical head end, the main downstream slot, and sending the main downstream data stream to the terminal-side optical splitter over the main link comprise:
occupying, by the optical head end, the main downstream slot, and sending the main downstream data stream to the second terminal-side optical splitter over the main link, wherein the second terminal-side optical splitter is configured to connect the main link and the second optical terminal; and
sending, by the terminal-side optical splitter, the main downstream data stream to the optical terminal comprises:
sending, by the second terminal-side optical splitter, the main downstream data stream to the second optical terminal; and
occupying, by the optical head end, the backup downstream slot, and sending the backup downstream data stream to the terminal-side optical splitter over the backup link comprise:
occupying, by the optical head end, the backup downstream slot, and sending the backup downstream data stream to the third terminal-side optical splitter over the backup link, wherein the third terminal-side optical splitter is configured to connect the backup link and the second optical terminal; and
sending, by the terminal-side optical splitter, the backup downstream data stream to the optical terminal comprises:
sending, by the third terminal-side optical splitter, the backup downstream data stream to the second optical terminal.

16. An optical network, wherein the optical network comprises an optical head end, a main link, a backup link, a terminal-side optical splitter, and an optical terminal, wherein the optical head end is separately connected to the main link and the backup link, and the terminal-side optical splitter is separately connected to the main link, the backup link, and the optical terminal, wherein
the optical head end is configured to: occupy a main downstream slot, and send a main downstream data stream to the terminal-side optical splitter over the main link; and
the terminal-side optical splitter is configured to send the main downstream data stream to the optical terminal; and
the optical head end is configured to: occupy a backup downstream slot, and send a backup downstream data stream to the terminal-side optical splitter over the backup link, wherein an intersection set between the main downstream slot and the backup downstream slot is an empty set on a time axis; and
the terminal-side optical splitter is configured to send the backup downstream data stream to the optical terminal.

17. The optical network according to claim 16, wherein the optical terminal comprises a first optical terminal, the terminal-side optical splitter comprises a first terminal-side optical splitter, and the first optical terminal is separately connected to the main link and the backup link via the first terminal-side optical splitter.

18. The optical network according to claim 16 or 17, wherein the optical terminal comprises a second optical terminal, the terminal-side optical splitter comprises a second terminal-side optical splitter and a third terminal-side optical splitter, the second optical terminal is connected to the main link via the second terminal-side optical splitter, and the second optical terminal is connected to the backup link via the third terminal-side optical splitter.

19. The optical network according to any one of claims 16 to 18, wherein at least one main optical splitter is comprised on the main link, at least one backup optical splitter is comprised on the backup link, the terminal-side optical splitter is connected to one of the at least one main optical splitter, and the terminal-side optical splitter is connected to one of the at least one backup optical splitter.

20. The optical network according to any one of claims 16 to 18, wherein the optical network comprises N sequentially arranged optical terminals, wherein N is any integer not less than 2; and
time at which the N optical terminals receive the main downstream data stream is in ascending order, and time at which the N optical terminals receive the backup downstream data stream is in descending order.

21. An optical head end, comprising a transmitter and a processor, wherein the transmitter is connected to the processor, wherein
the processor is configured to: send a main downstream data stream to the transmitter, and indicate a main downstream slot; and
the transmitter is configured to: occupy the main downstream slot, and send the main downstream data stream to an optical terminal over a main link, wherein the main link is used to connect the optical terminal and the optical head end; and
the processor is configured to: send a backup downstream data stream to the transmitter, and indicate a backup downstream slot; and
the transmitter is configured to: occupy the backup downstream slot, and send the backup downstream data stream to the optical terminal over a backup link, wherein the backup link is used to connect the optical terminal and the optical head end, the main link is different from the backup link, and an intersection set between the main downstream slot and the backup downstream slot is an empty set on a time axis.

22. An optical terminal, comprising a receiver and a processor, wherein the receiver is connected to the processor, wherein
the receiver is configured to: occupy a main time period, and receive a main downstream data stream from an optical head end over a main link, wherein the main link is used to connect the optical terminal and the optical head end; and
the processor is configured to process the main downstream data stream from the receiver; and/or
the receiver is configured to: occupy a backup time period, and receive a backup downstream data stream from the optical head end over a backup link, wherein the backup link is used to connect the optical terminal and the optical head end, the optical terminal is separately connected to the main link and the backup link via a same terminal-side optical splitter, and an intersection set between the main time period and the backup time period is an empty set on a time axis; and
the processor is configured to process the backup downstream data stream from the receiver.

23. A computer-readable storage medium, wherein the computer storage medium stores a computer program, the computer program comprises program instructions, and when the program instructions are executed by a processor, the processor is caused to perform the method according to any one of claims 1 to 12.
